# EUROPÄISCHE PATENTSCHRIFT

(11) **EP 1 665 748 B1**
(45) Veröffentlichungstag und Bekanntmachung des Hinweises auf die Patenterteilung: **15.05.2013**
(21) Anmeldenummer: 04766820.7
(22) Anmeldetag: 17.09.2004
(51) Int. Cl.: H04M 1/727, G10L 17/00

(54) **VERFAHREN UND TELEKOMMUNIKATIONSSYSTEM MIT DRAHTLOSER TELEKOMMUNIKATION ZWISCHEN EINEM MOBILTEIL UND EINER BASISSTATION ZUM REGISTRIEREN EINES MOBILTEILS**
METHOD AND TELECOMMUNICATION SYSTEM INVOLVING WIRELESS TELECOMMUNICATION BETWEEN A MOBILE PART AND A BASE STATION FOR REGISTERING A MOBILE PART
PROCEDE ET SYSTEME DE TELECOMMUNICATION A TELECOMMUNICATION SANS FIL ENTRE UN ELEMENT MOBILE ET UNE STATION DE BASE POUR ENREGISTRER UN ELEMENT MOBILE

(30) Priorität: 17.09.2003 DE 10343066
(43) Veröffentlichungstag der Anmeldung: 07.06.2006
(73) Patentinhaber: Gigaset Communications GmbH, 81379 München (DE)
(72) Erfinder: AUBAUER, Roland, 81543 München (DE); KAMPERSCHROER, Erich, 46499 Hamminkeln (DE); KLINKE, Stefano Ambrosius, 50169 Kerpen (DE); KUNSTMANN, Niels, 85540 Haar (DE); PFLAUM, Karl-Heinz, 46395 Bocholt (DE)
(74) Vertreter: Michalski Hüttermann & Partner Patentanwälte
(86) Internationale Anmeldenummer: PCT/EP2004/052227
(87) Internationale Veröffentlichungsnummer: WO 2005/029828

(56) Entgegenhaltungen:
- EP-B- 0 667 078
- WO-A-03/003702
- WO-A1-01/50455
- DE-A- 19 740 934
- US-A- 5 758 317

## Beschreibung

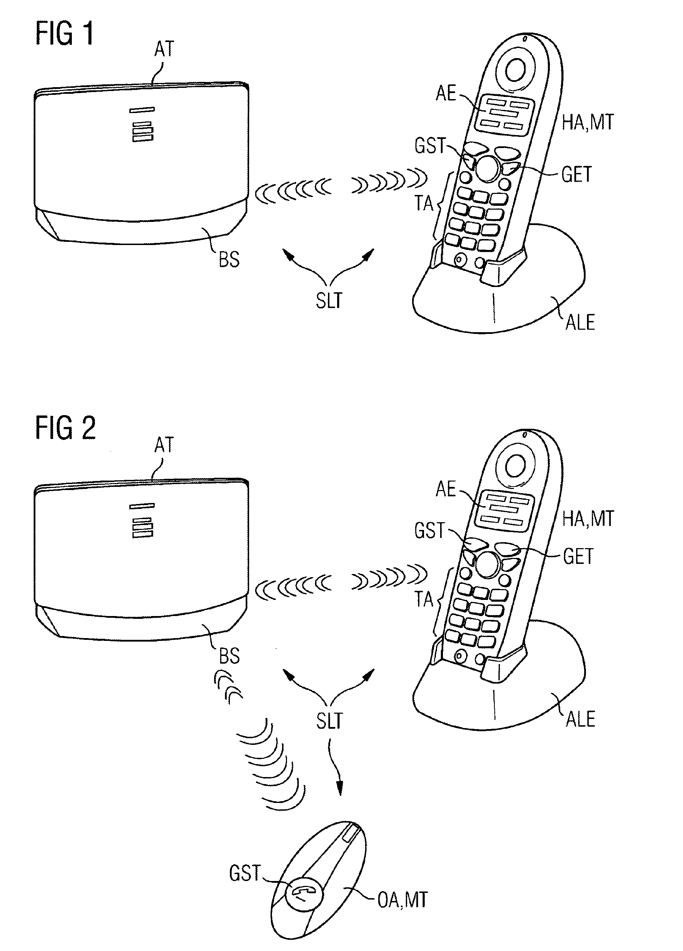

Telekommunikationssysteme zur drahtlosen Telekommunikation, die jeweils aus mindestens einer Basisstation und aus mindestens einem akkubetriebenen Mobilteil bestehen, sind beispielsweise Schnurlos-Telefone mit einer Schnurlos-Basisstation und integrierter oder separater Akkuladeeinrichtung sowie mit mindestens einem Schnurlos-Mobilteil (vgl. FIGUREN 1 und 2), mit denen man über kurze Entfernungen mobil über das Festnetz, z.B. das ISDN- oder PSTN, einerseits telefonieren bzw. Nah- und Ferngespräche führen - also Sprachdaten und andererseits Paketdaten, z.B. SMS-Nachrichten, übertragen bzw. austauschen kann. Darüber hinaus wird es in absehbarer Zeit auch Schnurlos-Telekommunikationssysteme geben, die für die Sprach- und Paketdatenübertragung über das Internet geeignet sind. Aus diesem Grund wird ein weltweiter Markt für solche Schnurlos-Telekommunikationssysteme, trotz der weltweiten Dominanz der Mobilfunkgeräte (GSM-Handapparate oder demnächst UMTS-Handapparate) auch in Zukunft vorhanden sein, der vielleicht aber, insbesondere vor dem Hintergrund von derzeit diskutierten WLAN- bzw. IEEE802.11-Anwendungsszenarien sogar größer werden könnte. Das derzeit zumindest in Europa am weitesten verbreitete Protokoll, auf dem solche Schnurlos-Telefone basieren, ist das DECT-Protokoll.

FIGUR 1 zeigt ein bekanntes Schnurlos-Telefon SLT, das Siemens Gigaset 4175isdn, bestehend aus einer ISDN-fähigen Schnurlos-Basisstation BS vom Typ Gigaset 4175isdn, einem mit komfortabler Menüführung (Menüprotokoll) ausgebildeten Schnurlos-Handapparat HA vom Typ Gigaset 4000C und einer separaten Akkuladeeinrichtung ALE zum Laden der Akkumulatoren in dem Schnurlos-Handapparat HA, das nach dem DECT-Protokoll arbeitet bzw. funktioniert. Der Schnurlos-Handapparat HA weist eine Anzeigeeinrichtung (Display) AE und eine Tastatur TA auf, auf der sich z.B. ein als Gesprächsstarttaste ausgebildetes Bedienelement zum Beginnen eines Gesprächs GST und ein als Gesprächsendetaste ausgebildetes Bedienelement zum Beenden eines Gesprächs GET befinden. Die Schnurlos- Basisstation BS weist ein vorzugsweise als leuchtende Anmeldetaste ausgebildetes Bedienelement zur Herstellung der Anmeldebereitschaft AT, das bei Betätigung blinkt.

Damit man mit solchen aus zwei Geräten (Schnurlos-Basisstation und Schnurlos-Handapparat) bestehenden Schnurlos-Telekommunikationssystemen auch drahtlose mobile Telekommunikation betreiben kann, müssen die beiden Geräte miteinander "verheiratet" werden. Dies geschieht dadurch, dass der Schnurlos-Handapparat HA an der Schnurlos-Basisstation BS registriert bzw. angemeldet wird. Wie eine solche Anmeldeprozedur, insbesondere für DECT-spezifische Schnurlos-Telekommunikationssysteme, prinzipiell abläuft, ist in der EP 0 667 078 B1 ausführlich beschrieben.

Sowohl während einer solchen Anmeldeprozedur als auch im Vorfeld der Anmeldeprozedur, dem Herstellen der Anmeldebereitschaft, muss der Benutzer des Schnurlos-Telekommunikationssystems bislang immer tätig werden und z.B. in der angegebenen Reihenfolge sowohl die Basisstation als auch den Handapparat durch Betätigen der Anmeldetaste AT respektive der Gesprächsstarttaste GST oder Gesprächsendetaste GET anmeldebereit schalten, ein persönliches Identifikationswort, die so genannte "PIN" (Personal Identification Number), eingeben und eine INTERN-Nummer für den Handapparat auswählen. Die Anmeldetaste AT und die Gesprächsstarttaste GST bzw. Gesprächsendetaste GET sind somit Mittel zur Herstellung einer Anmeldebereitschaft bezogen auf die Schnurlos-Basisstation BS bzw. den Schnurlos-Handapparat HA.

Diese vom Benutzer durchzuführenden Maßnahmen sind nicht gerade bedienungsfreundlich, so dass man als Hersteller solcher Schnurlos-Telekommunikationssysteme die Anmeldeprozedur bereits im Herstellungsprozess durchgeführt hat. Dadurch wurde zwar die Bedienungsfreundlichkeit für den Käufer solcher Schnurlos-Telekommunikationssysteme verbessert, aber es wurden auch gleichzeitig die Herstellungskosten erhöht.

Um nun letzteres nicht tun zu müssen (Erhöhung der Herstellkosten), ohne dabei das erste zu unterlassen (Verbesserung der Bedienungsfreundlichkeit), ist es aus der WO03/003702 A1 zum Anmelden von akkubetriebenen Mobilteilen an Basisstationen mit einer Akkuladeeinrichtung von Telekommunikationssystemen zur drahtlosen Telekommunikation bekannt, die Anmeldebereitschaft zwischen dem anzumeldenden Mobilteil und der Basisstation automatisch herzustellen, ohne dass der Benutzer des Telekommunikationssystems die vorstehend beschriebenen Maßnahmen durchzuführen braucht. Dies wird dadurch erreicht, dass die Anmeldebereitschaft zum Anmelden des akkubetriebenen Mobilteils an der Basisstation mit der Akkuladeeinrichtung über Ladekontakte des Mobilteils und der Basisstation hergestellt wird und dann die Anmeldeprozedur wie gehabt über die Luftschnittstelle des Telekommunikationssystems abläuft.

Die Mittel zur Herstellung einer Anmeldebereitschaft bezogen auf die Schnurlos-Basisstation mit Akkuladeeinrichtung und den Schnurlos-Handapparat umfassen in diesem Fall die Akkuladeeinrichtung und die Ladekontakte.

Ausgehend von dem in FIGUR 1 dargestellten Schnurlos-Telefon besteht ein weiterer technischer Evolutionsschritt bei der Entwicklung von Schnurlos-Telefonen darin, die Schnurlos-Handapparate HA beispielsweise in Richtung Schnurlos-Ohrapparate (cordless earphone) zu miniaturisieren sowie einhergehend damit schrittweise eine sprachgesteuerte Bedienoberfläche des Schnurlos-Handapparats HA einzuführen.

Endziel ist es, weg von den heutigen Schnurlos-Handapparaten mit einer Benutzerführung über Tasten und Display zu kompakteren bzw. kleineren Schnurlos-Handapparaten, z.B. als Schnurlos-Ohrapparate ausgebildeten "Ohrstecker", zu gelangen, bei dem die Benutzerführung komplett sprachgesteuert ist. Funktional ist dieser "Ohrstecker" dabei vergleichbar mit heutigen Schnurlos-Handapparaten, jedoch vermindert um Anzeigeeinrichtung (Display) und Tastatur.

FIGUR 2 zeigt als Vision ausgehend von FIGUR 1 das um einen Schnurlos-Ohrapparat OA erweiterte Schnurlos Telefon SLT vom Typ Gigaset 4175isdn. Der als "Ohrstecker" ausgebildete Schnurlos-Ohrapparat OA weist gegenüber den bis dato verwendeten Schnurlos-Handapparaten HA nur noch eine einzige Taste, z.B. die Gesprächsstarttaste oder "Push2Talk"-Taste GST, auf. Obwohl der Schnurlos-Handapparat HA und der Schnurlos-Ohrapparat OA sich einerseits bezüglich der Bedienoberfläche eindeutig unterscheiden, so sind sie andererseits aus der Sicht der Schnurlos-Basisstation BS beides Schnurlos-Mobilteile MT, die für den Betrieb an der Schnurlos-Basisstation BS im Rahmen einer Anmeldeprozedur bei dieser registriert werden müssen.

Bei der konventioneller Benutzerführung erfolgt die Anmeldung eines Schnurlos-Mobilteils an einer Schnurlos-Basisstation (Registrierung) derart, dass das Schnurlos-Mobilteils und die Schnurlos-Basisstation in einen speziellen Anmeldemodus gebracht werden und zur Authentisierung des Benutzers - wie vorstehend erwähnt - die "PIN" (Personal Identification Number) am Schnurlos-Mobilteil eingegeben werden muss, um entsprechend von der Schnurlos-Basisstation im Rahmen der Anmeldeprozedur akzeptiert zu werden. Für diese Art der Anmeldeprozedur basierend auf konventioneller Benutzerführung ist es erforderlich, dass das Schnurlos-Mobilteil eine Tastatur und ein Display aufweist.

Der Wegfall von Display und Tastatur bei Schnurlos-Ohrapparaten zwingt zu alternativen Formen der Benutzerführung bei der Anmeldung eines Schnurlos-Mobilteils an einer Schnurlos-Basisstation im Rahmen einer Anmeldeprozedur. So wird beispielsweise in bekannten Schnurlos-Telefonen von Siemens wie den Gigaset 100 und Gigaset 200 eine hardwaregetriggerte, automatisierte Anmeldeprozedur benutzt.

Eine andere Möglichkeit der Benutzerführung bei der Anmeldung besteht darin, basierend auf der ohnehin vorgesehenen sprachgesteuerten Bedienoberfläche eine dann in dem Telekommunikationssystem (z.B. Basisstation oder Mobilteil) vorhandene Infrastruktur zum Erkennen von Sprache für eine sprachgesteuerte Benutzerführung bei der Anmeldung zu nutzen.

Schnurlos-Telefone mit einer Infrastruktur zum Erkennen von Sprache sind bereits auf dem Markt verfügbar. So gibt es z.B. Siemens Schnurlos-Telefone vom Typ Gigaset (Serie 4xxx), bei denen die Basisstationen mit Sprachsteuerungen ausgerüstet sind. Bei diesen Sprachsteuerungen geht es gemäß der WO 01/67435 A1 darum, aus einem Telefonbuch mit maximal 20 Einträgen durch Sprechen des Namens die entsprechende Telefonnummer wählen zu lassen. Dies ist ein sprecherabhängiges Verfahren, bei dem in internen Datenbanken z.B. vier verschiedene Sprecher einen entsprechenden Spracherkenner mit ihrer spezifischen Sprache trainieren können (Beispiel: Es gibt zwei Benutzer. Jeder Benutzer spricht für jeden Eintrag ein Sprachmuster auf. Somit sind maximal 10 Einträge möglich.). Dieses Leistungsmerkmal ist vergleichbar mit der Sprachsteuerung, wie sie in Mobiltelefonen integriert ist.

Die derzeitigen Sprachsteuerungen sind also alles in allem rudimentär, verglichen mit den Möglichkeiten, die sich gemäß der WO 01/15141 A1 aus den neuartigen, sprecherunabhängigen Verfahren ergeben, die z.B. auf einem "Hidden Markov Modell" basieren. Durch solche sprecherunabhängigen Verfahren ist es auch erst möglich, eine sprachgesteuerte Benutzerführung bei der Anmeldung eines Mobilteils an einer Basisstation im Rahmen einer Anmeldeprozedur zu implementieren.

Aus der US 5,758,317 ist es bekannt, dass eine Benutzeridentifikationskennung ("operator identification code") mit einem Kommunikationsgerät verknüpft werden soll, ohne dass es hierfür der manuellen Eingabe über ein spezielles Management-Terminal bedarf. Um dieses zu erreichen, wird vorgeschlagen, dass nach einer Aktivierung des Kommunikationsgerätes (z.B. durch einen "sign-on-button") vom Benutzer des Gerätes ein Sprachmuster ("voice pattern") in das Gerät gesprochen wird und dieses Sprachmuster zusammen mit einer Geräteidentifikationskennung ("communication unit identification code") über eine Basisstation, die mit dem Kommunikationsgerät durch drahtlose Kommunikation verbunden ist, an eine mit der Basisstation verbundene Einrichtung zum Zuweisen von Kommunikationsressourcen ("communication resource allocator") übertragen wird, wo das Sprachmuster mit gespeicherten Referenzsprachmustern verglichen wird, die während einer Trainingsphase durch entsprechende Eingaben von Benutzern in die Einrichtung erzeugt werden. In dieser Trainingsphase wird auch vom Benutzer des Kommunikationsgerätes ein Referenzsprachmuster erzeugt und zudem die Benutzeridentifikationskennung eingegeben. Wird in der Einrichtung eine Übereinstimmung zwischen dem Sprachmuster und einem gespeicherten Referenzsprachmuster festgestellt, so wird in der Einrichtung die Benutzeridentifikationskennung mit der Geräteidentifikationskennung und damit der Benutzer mit dem Kommunikationsgerät verknüpft.

Die der Erfindung zugrunde liegende Aufgabe besteht darin, ein Verfahren und Telekommunikationssystem mit drahtlosen Telekommunikation zwischen einem Mobilteil und einer Basisstation zum Registrieren eines Mobilteils bei einer Basisstation anzugeben, bei dem das Registrieren des Mobilteils bei der Basisstation dahingehend verbessert und vereinfacht wird, dass sich insbesondere Mobilteile, die für eine solche Registrierung kein zweckmäßiges, gewöhnlich ausgestaltetes Eingabemedium, z.B. Tastatur oder stiftorientiertes Eingabemedium zur Zeicheneingabe, aufweisen, bei einer Basisstation registrieren lassen können, aber dass auch alle sonstigen Mobilteile, die über ein solches Eingabemedium verfügen, alternativ das Registrierungsverfahren nutzen können.

Diese Aufgabe wird durch die im Anspruch 1 angegebenen Verfahrensmerkmale gelöst.

Diese Aufgabe wird außerdem durch die im Anspruch 17 angegebenen Telekommunikationssystemmerkmale gelöst.

Die der Erfindung zugrunde liegende Idee besteht darin, dass zum Registrieren eines Mobilteils bei einer Basisstation in einem Telekommunikationssystem mit drahtloser Telekommunikation zwischen dem Mobilteil und der Basisstation das Mobilteil und die Basisstation zunächst jeweils in einen Anmeldebereitschaftszustand gebracht werden. Anschließend wird zwischen dem Mobilteil und der Basisstation durch Meldungsaustausch im Rahmen einer Feststellungsprozedur festgestellt, ob die Basisstation eine sprachgesteuerte Registrierung unterstützt und somit das Mobilteil prinzipiell an der Basisstation anmeldefähig ist. Danach wird, wenn die prinzipielle Anmeldefähigkeit festgestellt wird, zwischen dem Mobilteil und der Basisstation eine für die Sprachdatenübertragung geeignete Nutzkanalverbindung, ein so genannter Sprachdatenpfad, hergestellt. Anderenfalls wird von dem Mobilteil festgestellt, ob es sich an einer anderen anmeldebereiten Basisstation anmelden kann. Abschließend wird für eine in das Mobilteil gesprochene IST-Authentisierungskennung, z.B. eine PIN-Kennung, untersucht, ob die IST-Authentisierungskennung mit einer SOLL-Authentisierungskennung identisch ist. Ist dieses der Fall, so wird das Mobilteil an der Basisstation registriert, anderenfalls wird der Registrierungsversuch abgewiesen.

Bei diesem Konzept (dieser Methode) wird vorzugsweise davon ausgegangen, dass das Mobilteil, z.B. ein Schnurlos-Handapparat oder ein Schnurlos-Ohrapparat, den Sprachkanal zur Basisstation aufbaut und die Basisstation den Spracherkenner (vgl. Anspruch 14 bzw. 30), die Bedienerführung und die Sprachwegeumschaltung beinhaltet.

Dies hat den Vorteil, dass die "Intelligenz" in der Schnurlos-Basisstation liegt, wodurch der Schnurlos-Handapparat bzw. der Schnurlos-Ohrapparat (Earphone) sehr leicht und kostengünstig aufgebaut werden kann.

Alternativ ist es aber auch möglich, die Spracherkennung in dem Schnurlos-Handapparat bzw. dem Schnurlos-Ohrapparat durchzuführen. Dieses bedeutet aber gemäß den Ansprüchen 15 und 31, dass eine aus der gesprochenen IST-Authentisierungskennung zurückgewonnene IST-Authentisierungskennung für den Vergleich mit der SOLL-Authentisierungskennung verschlüsselt an die Schnurlos-Basisstation zu übertragen ist.

Egal welche der Alternativen zum Einsatz kommen, das grundsätzliche Konzept, die Registrierung eines Mobilteils an eine Basisstation mittels Spracherkennung durchzuführen, erfordert neue technologische Ansätze. Die Beschäftigung mit diesen Ansätzen ergibt aber Sinn, weil solche sprachgesteuerten, benutzerfreundlichen Schnurlostelefone im Rahmen der Produktvision "Handsfree home" nur mit dem vorgestellten Konzept realisiert werden können. Dieses beinhaltet:
Herstellen der Anmeldebereitschaft bei Mobilteil und Basisstation.
Herstellen des Sprachdatenpfades zwischen Mobilteil und Basisstation.
Sprechen einer "PIN" zur Authentisierung des Mobilteils. Sprecherunabhängige Spracherkennung mit Zahlenfolgenerkennung.
Das Mobilteil muss eine Basisstation mit Sprachsteuerung von einer nicht-sprachgesteuerten Basisstation unterscheiden können.

In der nachfolgenden Figurenbeschreibung wird ausgehend von diesen hier aufgeführten "Merkmalen" als Ausführungsbeispiel ein Ablaufschema dargestellt und beschrieben, bei dem einzelne Details im Ablauf durchaus auch anders gestalten werden können - z.B. eine andere Methode zur Herstellung der Anmeldebereitschaft zu verwenden, aber man wird - auf einer höheren Ebene betrachtet - nicht umhin können, die angegebenen "Merkmale" umzusetzen.

Das im speziellen Beschreibungsteil beschriebene Ablaufschema zeigt und beschreibt den Ablauf zur Registrierung eines Mobilteils an eine Basisstation. Dieses Ablaufschema stellt nicht die vollständige Beschreibung einer softwaremäßigen Implementierung der vorgestellten Methode dar, sondern beschreibt den "Geradeausfall", bei dem Fehlerbehandlungsläufe und sonstige Details einer vollständigen Softwareimplementierung nicht angegeben sind.

Vorteilhafte Weiterbildungen der Erfindung sind in den Unteransprüchen angegeben.

Nach Anspruch 2 (Anspruch 19) ist es von Vorteil, wenn nach einem abgewiesenen Registrierungsversuch die Registrierung für mindestens einmal wiederholt wird, bevor die Registrierung endgültig gescheitert ist.

Bei der Feststellungsprozedur nach Anspruch 3 (Anspruch 20) ist es zweckmäßig, dass das Mobilteils die Überprüfung, ob es an einer anderen anmeldebereiten Basisstation anmeldefähig ist, solange durchführt, bis von dem Mobilteil keine andere anmeldebereite Basisstation mehr gefunden wird.

Die Ansprüche 4 bis 6 (Ansprüche 21 bis 23) befassen sich jeweils damit, wie im Mobilteil - je nach Art der Ausbildung - und in der Basisstation jeweils die Anmeldebereitschaft in vorteilhafter Weise hergestellt werden kann.

Die Ansprüche 7 und 8 (Ansprüche 24 und 25) befassen sich jeweils damit, über welches Medium z.B. der Meldungsaustausch vorzugsweise stattfinden kann. Nach Anspruch 7 (Anspruch 23) erfolgt dieser über Ladekontakte in einer Akkuladeeinrichtung der Basisstation, wenn das Mobilteil sich in dieser Akkuladeeinrichtung befindet, während nach Anspruch 8 (Anspruch 24) über Luftschnittstellen in der Basisstation und in dem Mobilteil erfolgt.

Im Anspruch 9 (Anspruch 26) ist angegeben, welche Meldungen im Rahmen des Meldungsaustauschs vorzugsweise übertragen werden.

Nach Anspruch 10 (Anspruch 27) ist es vorteilhaft, wenn die Nutzkanalverbindung von der Basisstation hergestellt wird.

Um den Benutzer des Mobilteils über das Herstellen der Nutzkanalverbindung zu informieren, ist es gemäß Anspruch 11 (Anspruch 28) zweckmäßig einen Begrüßungstext, z.B. mit dem Wortlaut "Sie möchten Ihr Mobilteil anmelden. Sprechen Sie bitte die PIN-Kennung.", von der Basisstation an das Mobilteil zu übertragen.

Gemäß Anspruch 14 (Anspruch 30) findet die Untersuchung, ob die IST-Authentisierungskennung mit der SOLL-Authentisierungskennung identisch ist in der Basisstation statt, wobei - nachdem ein zu der gesprochenen IST-Authentisierungskennung korrespondierendes Sprachmuster analysiert worden ist und aus dem Sprachmuster eine zurückgewonnene IST-Authentisierungskennung erzeugt worden ist, die mit der SOLL-Authentisierungskennung verglichen wird - ein aus der gesprochenen IST-Authentisierungskennung erzeugtes, das Sprachmuster enthaltendes Kennungssignal von dem Mobilteil zur Basisstation übertragen wird.

Um den Benutzer des Mobilteils über die erfolgreiche Registrierung zu informieren, ist es gemäß Anspruch 17 (Anspruch 33) zweckmäßig einen Hinweistext, z.B. mit dem Wortlaut "Sie sind angemeldet. Sie haben die interne Teilnehmernummer 'xyz'.", von der Basisstation an das Mobilteil zu übertragen.

Weitere vorteilhafte Weiterbildungen der Erfindung sind in den übrigen Unteransprüchen angegeben.

Ein Ausführungsbeispiel der Erfindung wird anhand der FIGUREN 3 bis 6 erläutert. Es zeigen:
FIGUR 3 Prinzipieller Aufbau eines Schnurlos-Mobilteils und einer Schnurlos-Basisstation für die sprachgesteuerte Registrierung des Mobilteils bei der Basisstation gemäß dem die Spracherkennung in der Basisstation stattfindet,
FIGUR 4 Prinzipieller Aufbau eines Schnurlos-Mobilteils und einer Schnurlos-Basisstation für die sprachgesteuerte Registrierung des Mobilteils bei der Basisstation gemäß dem die Spracherkennung in dem Mobilteil stattfindet,
FIGUR 5 anhand eines Flussdiagramms den Ablauf für das Schnurlos-Mobilteil bezüglich dessen sprachgesteuerter Registrierung bei der Schnurlos-Basisstation gemäß den FIGUREN 3 und 4,
FIGUR 6 anhand eines Meldung-Zustand-Diagramms den Meldungsfluss beim Meldungsaustausch zwischen dem Schnurlos-Mobilteil und der Schnurlos-Basisstation bezüglich der sprachgesteuerten Registrierung des Mobilteils bei der Basisstation gemäß den FIGUREN 3 bzw. 4.

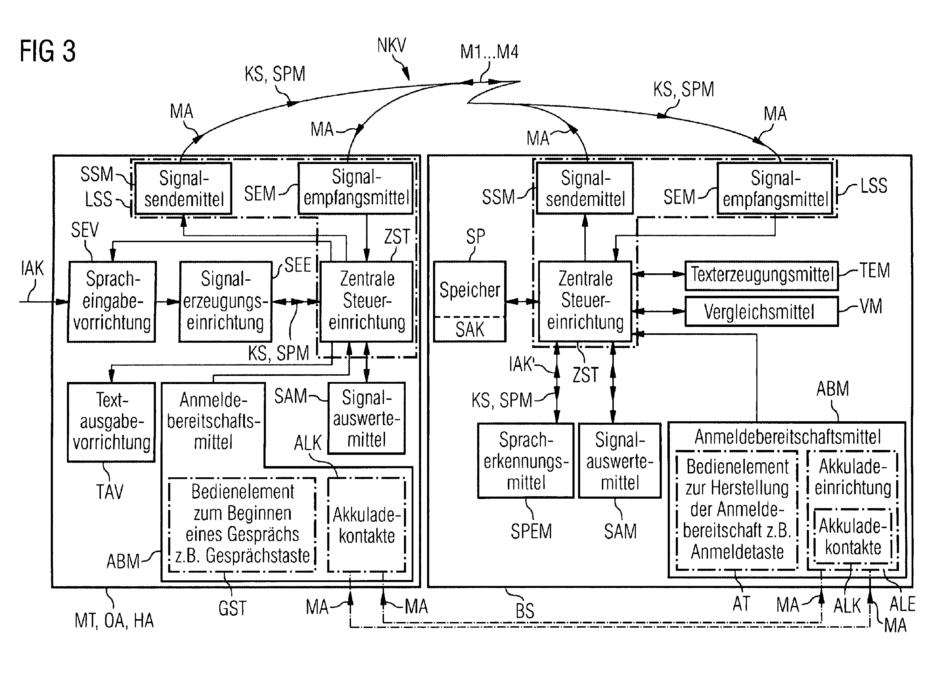

FIGUR 3 zeigt den prinzipiellen Aufbau eines Schnurlos-Mobilteils MT, OA, HA, das gemäß der FIGUREN 1 und 2 entweder als gewöhnlicher Schnurlos-Handapparat HA oder aber auch als Schnurlos-Ohrapparat OA ausgebildet sein kann, und einer Schnurlos-Basisstation BS für die sprachgesteuerte Registrierung des Mobilteils MT, OA, HA bei der Basisstation BS, wobei die Spracherkennung für die sprachgesteuerte Registrierung in der Schnurlos-Basisstation BS stattfindet.

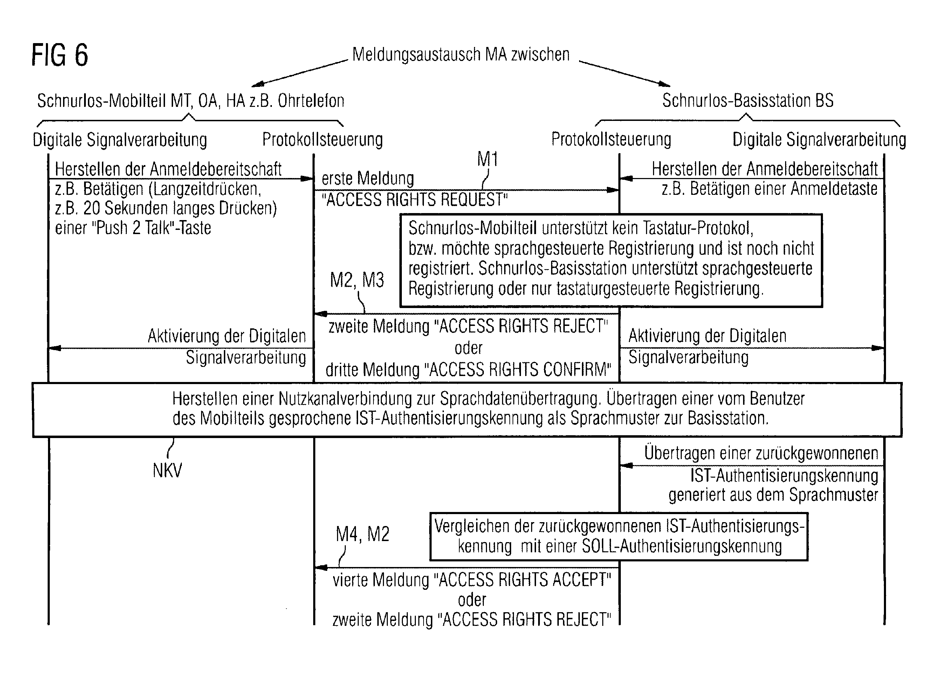

Die Registrierung des Mobilteils MT, OA, HA bei der Basisstation BS erfolgt in der Regel über die Luft. Zu diesem Zweck sind sowohl in der Schnurlos-Basisstation BS als auch in dem Schnurlos-Mobilteil MT, OA, HA jeweils Signalsendemittel SSM und Signalempfangsmittel SEM vorhanden. Zwischen den Signalsendemitteln SSM und dem Signalempfangsmittel SEM in der Schnurlos-Basisstation BS und in dem Schnurlos-Mobilteil MT, OA, HA findet über die Luft ein funkbasierter Meldungsaustausch MA statt. Im Rahmen dieses Meldungsaustausches MA werden zwischen der Schnurlos-Basisstation BS und dem Schnurlos-Mobilteil MT, OA, HA insbesondere eine Vielzahl von Meldungen M1...M4 übertragen. Welche Meldungen das im Einzelnen sind, wird bei der Beschreibung von FIGUR 6 angegeben.

Alternativ zu der sprachgesteuerten Registrierung des Schnurlos-Mobilteils MT, OA, HA über die Luft ist es auch möglich, wie in den vorveröffentlichten internationalen Patentanmeldungen WO 99/14956 A2 und WO 03/003702 A1 jeweils beschrieben, dass sich das Schnurlos-Mobilteil MT, OA, HA nicht über die Luft bei der Schnurlos-Basisstation BS registriert, sondern stattdessen für diese Registrierung, wenn es sich in einer Akkuladeeinrichtung ALE der Schnurlos-Basisstation BS befindet, sowohl in dem Schnurlos-Mobilteil MT, OA, HA als auch in der Schnurlos-Basisstation BS vorhandene Akkuladekontakte ALK benutzt. Über diese leitungsgebundene Verbindung zwischen den Akkuladekontakten ALK erfolgt dann vorzugsweise zumindest teilweise der vorstehend erwähnte Meldungsaustausch MA. In der FIGUR 3 ist dieser alternative Meldungsaustausch zwischen den Akkuladekontakten ALK durch zwei gestrichelte Doppelpfeile dargestellt.

Die Akkuladekontakte ALK in dem Schnurlos-Mobilteil MT, OA, HA und der Schnurlos-Basisstation BS sind jeweils Anmeldebereitschaftsmitteln ABM unmittelbar bzw. mittelbar zugeordnet. Während die Akkuladekontakte ALK in dem Schnurlos-Mobilteil MT, OA, HA neben einem Bedienelement zum Beginnen eines Gesprächs, z.B. eine Gesprächstaste, GST den Anmeldebereitschaftsmitteln ABM unmittelbar zugeordnet sind, sind die Akkuladekontakte ALK in der Schnurlos-Basisstation BS Bestandteil der Akkuladeeinrichtung ALE, wobei diese neben einem Bedienelement zur Herstellung der Anmeldebereitschaft, z.B. eine Anmeldetaste, AT den Anmeldebereitschaftsmitteln ABM in der Schnurlos-Basisstation BS ebenfalls unmittelbar zugeordnet ist.

Die Anmeldebereitschaftsmittel ABM, die Signalsendemittel SSM und die Signalempfangsmittel SEM in dem Schnurlos-Mobilteil MT, OA, HA und der Schnurlos-Basisstation BS sind jeweils einer Zentralen Steuereinrichtung ZST zugeordnet, die jeweils Bedien- und Funktionsabläufe in dem Schnurlos-Mobilteil MT, OA, HA bzw. der Schnurlos-Basisstation BS steuert. Die Signalsendemittel SSM und Signalempfangsmittel SEM bilden mit der Zentralen Steuereinrichtung ZST jeweils eine Luftschnittstelle LSS.

In dem Schnurlos-Mobilteil MT, OA, HA sind neben den vorstehend genannten Sende-/Empfangsmitteln SSM, SEM noch eine Spracheingabevorrichtung SEV, eine Signalerzeugungseinrichtung SEE, eine Textausgabevorrichtung TAV sowie Signalauswertemittel SAM der Zentralen Steuereinrichtung ZST zugeordnet, während in der Schnurlos-Basisstation BS der zentralen Steuereinrichtung ZST neben den Sende-/Empfangsmitteln SSM, SEM noch ein Speicher SP mit einer darin abgelegten, vorzugsweise als PIN-Kennung (Personal Identification Number) ausgebildeten SOLL-Authentisierungskennung SAK, Texterzeugungsmittel TEM, Vergleichsmittel VM, Spracherkennungsmittel SPEM sowie Signalauswertemittel SAM zugeordnet sind.

Zur Registrierung des Schnurlos-Mobilteils MT, OA, HA bei der Schnurlos-Basisstation BS werden beide zunächst jeweils in einen Zustand zum gegenseitigen Anmelden, den so genannten Anmeldebereitschaftszustand, gebracht. Dieser Anmeldebereitschaftszustand kann unabhängig davon, ob der Meldungsaustausch MA über die Luft und/oder über die Leitungsverbindung zwischen den Akkuladekontakten ALK stattfindet, auf unterschiedliche Weise erfolgen. So ist es einerseits möglich, dass die Anmeldebereitschaft in bekannter Weise (vgl. die Druckschriften WO 99/14956 A2 und WO 03/003702 A1) mit den Akkuladekontakten ALK in die Akkuladeeinrichtung ALE mit den Akkuladekontakten ALK der Schnurlos-Basisstation BS gelegt wird.

Alternativ dazu ist es auch möglich, dass die Anmeldebereitschaft der Schnurlos-Basisstation BS durch das Betätigen des Bedienelementes zur Herstellung der Anmeldebereitschaft, z.B. der Anmeldetaste, AT hergestellt wird und dass die Anmeldebereitschaft des Schnurlos-Mobilteils MT, OA, HA durch das Betätigen des Bedienelementes zum Beginnen eines Gesprächs, z.B. der Gesprächstaste, GST erfolgt.

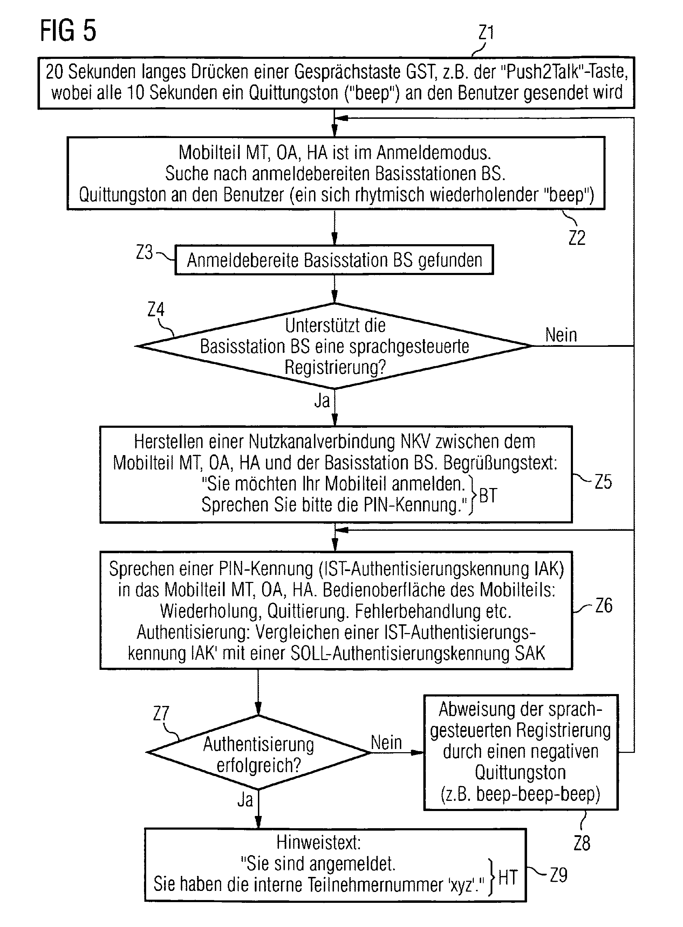

Im Anschluss daran wird zwischen dem Schnurlos-Mobilteil MT, OA, HA und der Schnurlos-Basisstation BS im Rahmen einer Feststellungsprozedur durch den Meldungsaustausch MA festgestellt, ob die Schnurlos-Basisstation BS eine sprachgesteuerte Registrierung unterstützt und somit das Schnurlos-Mobilteil MT, OA, HA prinzipiell an der Schnurlos-Basisstation BS anmeldefähig ist (vgl. FIGUR 6). Die bei diesem Meldungsaustausch MA übertragenen Meldungen M1...M4 werden jeweils von den Signalempfangsmitteln SEM empfangen und gesteuert von der Zentralen Steuereinrichtung ZST von den Signalauswertemitteln SAM ausgewertet. Wird aufgrund dieser Auswertung die prinzipielle Anmeldefähigkeit des Schnurlos-Mobilteils MT, OA, HA an der Schnurlos-Basisstation BS festgestellt, so wird zwischen dem Schnurlos-Mobilteil MT, OA, HA und der Schnurlos-Basisstation BS eine für die Sprachdatenübertragung geeignete Nutzkanalverbindung NKV aufgebaut. Ergibt die Auswertung hingegen, dass die Schnurlos-Basisstation BS eine sprachgesteuerte Registrierung nicht unterstützt, womit das Schnurlos-Mobilteil MT, OA, HA bezüglich einer sprachgesteuerten Anmeldung nicht anmeldefähig ist, so ist der Registrierungsversuch des Schnurlos-Mobilteils MT, OA, HA an der Schnurlos-Basisstation BS gescheitert und es bleibt dem Schnurlos-Mobilteil MT, OA, HA nichts anderes übrig als zu versuchen, sich an einer anderen anmeldebereiten Schnurlos-Basisstation BS anzumelden (vgl. FIGUR 5).

Das Starten eines neuen Registrierungsversuches nach einem gescheiterten Versuch und damit der Meldungsaustausch MA im Rahmen der Feststellungsprozedur zur Feststellung, ob das Schnurlos-Mobilteil MT, OA, HA an einer anderen anmeldebereiten Schnurlos-Basisstation BS anmeldefähig ist, erfolgt vorzugsweise solange, bis von dem Schnurlos-Mobilteil MT, OA, HA keine andere anmeldebereite Schnurlos-Basisstation BS mehr gefunden wird.

Nach dem Aufbau der Nutzkanalverbindung NKV wird der Benutzer des Schnurlos-Mobilteils MT, OA, HA über die Textausgabevorrichtung TAV optisch und/oder akustisch aufgefordert, eine IST-Authentisierungskennung IAK in die Spracheingabevorrichtung SEV einzugeben. Die Aufforderung des Benutzers des Schnurlos-Mobilteils MT, OA, HA erfolgt gemäß FIGUR 5 vorzugsweise in Form eines Begrüßungstextes BT mit dem Wortlaut "Sie möchten Ihr Mobilteil anmelden. Sprechen Sie bitte die PIN-Kennung." Dieser Begrüßungstext BT wird vorzugsweise von den Texterzeugungsmitteln TEM in der Schnurlos-Basisstation BS erzeugt und von der Luftschnittstelle LSS in der Schnurlos-Basisstation BS über die Nutzkanalverbindung NKV an das Schnurlos-Mobilteil MT, OA, HA übertragen.

Alternativ ist es aber auch möglich, dass der Begrüßungstext BT bereits in dem Schnurlos-Mobilteil MT, OA, HA defaultmäßig hinterlegt ist und dann, nachdem eine anmeldebereite Schnurlos-Basisstation BS mit einer Sprachsteuerung gefunden und die Nutzkanalverbindung NKV aufgebaut worden ist, von die Textausgabevorrichtung TAV ausgegeben wird.

Aus der von dem Benutzer des Schnurlos-Mobilteils MT, OA, HA in die Spracheingabevorrichtung SEV eingegebenen, vorzugsweise als gesprochene PIN-Kennung ausgebildeten IST-Authentisierungskennung IAK wird in der Signalerzeugungseinrichtung SEE ein Kennungssignal KS mit einem darin enthaltenen Sprachmuster SPM erzeugt. Das Kennungssignal KS mit dem Sprachmuster SPM wird anschließend gesteuert von der Zentralen Steuereinrichtung ZST über die Signalsendemittel SSM und die Luft an die Schnurlos-Basisstation BS übertragen und dort von den Signalempfangsmitteln SEM empfangen. In der Schnurlos-Basisstation BS wird gesteuert durch die Zentrale Steuereinrichtung ZST aus dem empfangenen Kennungssignal KS mit dem darin enthaltenen Sprachmuster SPM mit den Spracherkennungsmitteln SPM eine zurückgewonnene IST-Authentisierungskennung IAK' erzeugt. Diese zurückgewonnene IST-Authentisierungskennung IAK' wird gesteuert durch die Zentrale Steuereinrichtung ZST durch die Vergleichsmittel VM mit der in dem Speicher SP hinterlegten SOLL-Authentisierungskennung SAK verglichen.

Ergibt dieser mit den Vergleichsmitteln VM durchgeführte Vergleich, dass die zurückgewonnene IST-Authentisierungskennung IAK' mit der SOLL-Authentisierungskennung SAK übereinstimmt, also identisch ist, so wird das Schnurlos-Mobilteil MT, OA, HA an der Schnurlos-Basisstation BS registriert. Stimmt hingegen die zurückgewonnene IST-Authentisierungskennung IAK' nicht mit der gespeicherten SOLL-Authentisierungskennung SAK überein, so weist die Schnurlos-Basisstation BS den Registrierungsversuch durch das Schnurlos-Mobilteil MT, OA, HA ab.

Bevor nach einem abgewiesenen Registrierungsversuch die sprachgesteuerte Registrierung endgültig gescheitert ist, wird der Registrierungsversuch vorzugsweise mindestens einmal wiederholt, um gemäß den Ausführungen zu FIGUR 5 eine falsche Kennungseingabe oder den Fall, dass an der Schnurlos-Basisstation BS bereits so viele Schnurlos-Mobilteile MT, OA, HA angemeldet bzw. registriert sind (Erschöpfung des Anmeldungskontingents der Schnurlos-Basisstation), dass kein weiteres Schnurlos-Mobilteil MT, OA, HA mehr an der Schnurlos-Basisstation BS angemeldet werden kann, zu vermeiden.

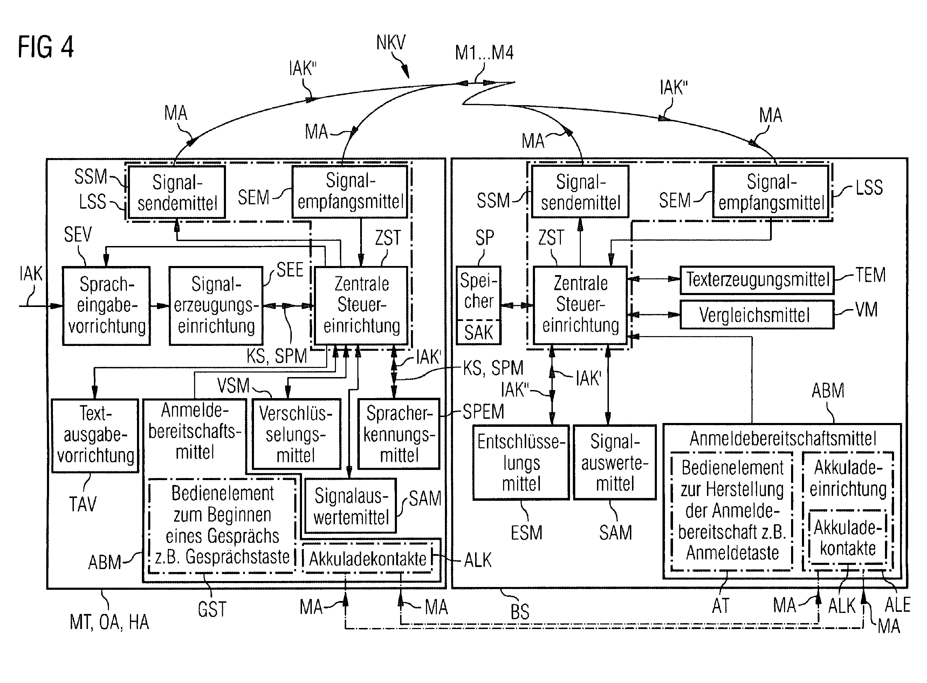

FIGUR 4 zeigt ausgehend von der FIGUR 3 den prinzipiellen Aufbau eines Schnurlos-Mobilteils MT, OA, HA, das gemäß der FIGUREN 1 und 2 wieder entweder als gewöhnlicher Schnurlos-Handapparat HA oder aber auch als Schnurlos-Ohrapparat OA ausgebildet sein kann, und einer Schnurlos-Basisstation BS für die sprachgesteuerte Registrierung des Mobilteils MT, OA, HA bei der Basisstation BS, wobei die Spracherkennung für die sprachgesteuerte Registrierung im Unterschied zu dem Schnurlos-Mobilteil MT, OA, HA in der FIGUR 3 in dem Schnurlos-Mobilteil MT, OA, HA stattfindet.

Die Registrierung des Mobilteils MT, OA, HA bei der Basisstation BS erfolgt in der Regel über die Luft. Zu diesem Zweck sind sowohl in der Schnurlos-Basisstation BS als auch in dem Schnurlos-Mobilteil MT, OA, HA wieder jeweils die Signalsendemittel SSM und Signalempfangsmittel SEM vorhanden. Zwischen den Signalsendemitteln SSM und dem Signalempfangsmittel SEM in der Schnurlos-Basisstation BS und in dem Schnurlos-Mobilteil MT, OA, HA findet über die Luft wieder der funkbasierte Meldungsaustausch MA statt. Im Rahmen dieses Meldungsaustausches MA werden zwischen der Schnurlos-Basisstation BS und dem Schnurlos-Mobilteil MT, OA, HA insbesondere wieder die Meldungen M1...M4 übertragen, auf die im Einzelnen bei der Beschreibung von FIGUR 6 eingegangen wird.

Alternativ zu der sprachgesteuerten Registrierung des Schnurlos-Mobilteils MT, OA, HA über die Luft ist es auch wieder möglich, wie in den vorveröffentlichten internationalen Patentanmeldungen WO 99/14956 A2 und WO 03/003702 A1 jeweils beschrieben, dass sich das Schnurlos-Mobilteil MT, OA, HA nicht über die Luft bei der Schnurlos-Basisstation BS registriert, sondern stattdessen für diese Registrierung, wenn es sich in der Akkuladeeinrichtung ALE der Schnurlos-Basisstation BS befindet, sowohl in dem Schnurlos-Mobilteil MT, OA, HA als auch in der Schnurlos-Basisstation BS die vorhandenen Akkuladekontakte ALK benutzt. Über diese leitungsgebundene Verbindung zwischen den Akkuladekontakten ALK erfolgt dann vorzugsweise zumindest teilweise der vorstehend erwähnte Meldungsaustausch MA. In der FIGUR 4 ist dieser alternative Meldungsaustausch zwischen den Akkuladekontakten ALK durch zwei gestrichelte Doppelpfeile dargestellt.

Die Akkuladekontakte ALK in dem Schnurlos-Mobilteil MT, OA, HA und der Schnurlos-Basisstation BS sind jeweils wieder den Anmeldebereitschaftsmitteln ABM unmittelbar bzw. mittelbar zugeordnet. Während die Akkuladekontakte ALK in dem Schnurlos-Mobilteil MT, OA, HA neben dem Bedienelement zum Beginnen eines Gesprächs, z.B. der Gesprächstaste, GST den Anmeldebereitschaftsmitteln ABM unmittelbar zugeordnet sind, sind die Akkuladekontakte ALK in der Schnurlos-Basisstation BS Bestandteil der Akkuladeeinrichtung ALE, wobei diese neben dem Bedienelement zur Herstellung der Anmeldebereitschaft, z.B. der Anmeldetaste, AT den Anmeldebereitschaftsmitteln ABM in der Schnurlos-Basisstation BS ebenfalls unmittelbar zugeordnet ist.

Die Anmeldebereitschaftsmittel ABM, die Signalsendemittel SSM und die Signalempfangsmittel SEM in dem Schnurlos-Mobilteil MT, OA, HA und der Schnurlos-Basisstation BS sind jeweils wieder der Zentralen Steuereinrichtung ZST zugeordnet, die jeweils die Bedien- und Funktionsabläufe in dem Schnurlos-Mobilteil MT, OA, HA bzw. der Schnurlos-Basisstation BS steuert. Die Signalsendemittel SSM und Signalempfangsmittel SEM bilden mit der Zentralen Steuereinrichtung ZST jeweils wieder die Luftschnittstelle LSS.

Im Unterschied zu dem Schnurlos- Mobilteil MT, OA, HA in der FIGUR 3 sind in dem Schnurlos-Mobilteil MT, OA, HA neben den vorstehend genannten Sende-/Empfangsmitteln SSM, SEM nicht nur die Spracheingabevorrichtung SEV, die Signalerzeugungseinrichtung SEE, die Textausgabevorrichtung TAV die Signalauswertemittel SAM der Zentralen Steuereinrichtung ZST zugeordnet, sondern zusätzlich noch Verschlüsselungsmittel VSM und Spracherkennungsmittel SPEM, während in der Schnurlos-Basisstation BS im Unterschied zu der Schnurlos-Basisstation BS in der FIGUR 3 der zentralen Steuereinrichtung ZST neben den Sende-/Empfangsmitteln SSM, SEM, dem Speicher SP mit der darin abgelegten, vorzugsweise als PIN-Kennung (Personal Identification Number) ausgebildeten SOLL-Authentisierungskennung SAK, den Texterzeugungsmitteln TEM, den Vergleichsmitteln VM und den Signalauswertemitteln SAM zusätzlich noch Entschlüsselungsmittel ESM zugeordnet sind.

Zur Registrierung des Schnurlos-Mobilteils MT, OA, HA bei der Schnurlos-Basisstation BS werden beide zunächst jeweils wieder in den Anmeldebereitschaftszustand gebracht. Dieser Anmeldebereitschaftszustand kann erneut unabhängig davon, ob der Meldungsaustausch MA über die Luft und/oder über die Leitungsverbindung zwischen den Akkuladekontakten ALK stattfindet, auf unterschiedliche Weise erfolgen. So ist es einerseits möglich, dass die Anmeldebereitschaft in bekannter Weise (vgl. die Druckschriften WO 99/14956 A2 und WO 03/003702 A1) mit den Akkuladekontakten ALK in die Akkuladeeinrichtung ALE mit den Akkuladekontakten ALK der Schnurlos-Basisstation BS gelegt wird.

Alternativ dazu ist es auch möglich, dass die Anmeldebereitschaft der Schnurlos-Basisstation BS durch das Betätigen des Bedienelementes zur Herstellung der Anmeldebereitschaft, z.B. der Anmeldetaste, AT hergestellt wird und dass die Anmeldebereitschaft des Schnurlos-Mobilteils MT, OA, HA durch das Betätigen des Bedienelementes zum Beginnen eines Gesprächs, z.B. der Gesprächstaste, GST erfolgt.

Im Anschluss daran wird wieder zwischen dem Schnurlos-Mobilteil MT, OA, HA und der Schnurlos-Basisstation BS im Rahmen der Feststellungsprozedur durch den Meldungsaustausch MA festgestellt, ob die Schnurlos-Basisstation BS eine sprachgesteuerte Registrierung unterstützt und somit das Schnurlos-Mobilteil MT, OA, HA prinzipiell an der Schnurlos-Basisstation BS anmeldefähig ist (vgl. FIGUR 6). Die bei diesem Meldungsaustausch MA übertragenen Meldungen M1...M4 werden wieder jeweils von den Signalempfangsmitteln SEM empfangen und gesteuert von der Zentralen Steuereinrichtung ZST von den Signalauswertemitteln SAM ausgewertet. Wird aufgrund dieser Auswertung wieder die prinzipielle Anmeldefähigkeit des Schnurlos-Mobilteils MT, OA, HA an der Schnurlos-Basisstation BS festgestellt, so wird zwischen dem Schnurlos-Mobilteil MT, OA, HA und der Schnurlos-Basisstation BS die für die Sprachdatenübertragung geeignete Nutzkanalverbindung NKV aufgebaut. Ergibt die Auswertung hingegen, dass die Schnurlos-Basisstation BS eine sprachgesteuerte Registrierung nicht unterstützt, womit das Schnurlos-Mobilteil MT, OA, HA bezüglich einer sprachgesteuerten Anmeldung nicht anmeldefähig ist, so ist der Registrierungsversuch des Schnurlos-Mobilteils MT, OA, HA an der Schnurlos-Basisstation BS wie in der FIGUR 3 gescheitert und es bleibt dem Schnurlos-Mobilteil MT, OA, HA nichts anderes übrig als zu versuchen, sich an einer anderen anmeldebereiten Schnurlos-Basisstation BS anzumelden (vgl. FIGUR 5).

Das Starten eines neuen Registrierungsversuches nach einem gescheiterten Versuch und damit der Meldungsaustausch MA im Rahmen der Feststellungsprozedur zur Feststellung, ob das Schnurlos-Mobilteil MT, OA, HA an einer anderen anmeldebereiten Schnurlos-Basisstation BS anmeldefähig ist, erfolgt wieder vorzugsweise solange, bis von dem Schnurlos-Mobilteil MT, OA, HA keine andere anmeldebereite Schnurlos-Basisstation BS mehr gefunden wird.

Nach dem Aufbau der Nutzkanalverbindung NKV wird der Benutzer des Schnurlos-Mobilteils MT, OA, HA wieder über die Textausgabevorrichtung TAV optisch und/oder akustisch aufgefordert, die IST-Authentisierungskennung IAK in die Spracheingabevorrichtung SEV einzugeben. Die Aufforderung des Benutzers des Schnurlos-Mobilteils MT, OA, HA erfolgt gemäß FIGUR 5 wieder vorzugsweise in Form des Begrüßungstextes BT mit dem Wortlaut "Sie möchten Ihr Mobilteil anmelden. Sprechen Sie bitte die PIN-Kennung." Dieser Begrüßungstext BT wird wieder vorzugsweise von den Texterzeugungsmitteln TEM in der Schnurlos-Basisstation BS erzeugt und von der Luftschnittstelle LSS in der Schnurlos-Basisstation BS über die Nutzkanalverbindung NKV an das Schnurlos-Mobilteil MT, OA, HA übertragen.

Alternativ ist es aber auch erneut möglich, dass der Begrüßungstext BT bereits in dem Schnurlos-Mobilteil MT, OA, HA defaultmäßig hinterlegt ist und dann, nachdem eine anmeldebereite Schnurlos-Basisstation BS mit einer Sprachsteuerung gefunden und die Nutzkanalverbindung NKV aufgebaut worden ist, von die Textausgabevorrichtung TAV ausgegeben wird.

Aus der von dem Benutzer des Schnurlos-Mobilteils MT, OA, HA in die Spracheingabevorrichtung SEV eingegebenen, vorzugsweise als gesprochene PIN-Kennung ausgebildeten IST-Authentisierungskennung IAK wird in der Signalerzeugungseinrichtung SEE wieder das Kennungssignal KS mit dem darin enthaltenen Sprachmuster SPM erzeugt. Das Kennungssignal KS mit dem Sprachmuster SPM wird anschließend gesteuert von der Zentralen Steuereinrichtung ZST im Unterschied zu der FIGUR 3 nicht über die Signalsendemittel SSM und die Luft zu den Signalempfangsmitteln SEM der Schnurlos-Basisstation BS übertragen, sondern den Spracherkennungsmitteln SPEM in dem Schnurlos-Mobilteil MT, OA, HA zugeführt. In diesen Spracherkennungsmitteln SPEM wird gesteuert durch die Zentrale Steuereinrichtung ZST aus dem Kennungssignal KS mit dem darin enthaltenen Sprachmuster SPM wieder die zurückgewonnene IST-Authentisierungskennung IAK' erzeugt. Diese zurückgewonnene IST-Authentisierungskennung IAK' wird anschließend gesteuert durch die Zentrale Steuereinrichtung ZST von den Verschlüsselungsmitteln VSM verschlüsselt und danach in verschlüsselter Form IAK" über die Signalsendemittel SSM und die Luft an die Schnurlos-Basisstation BS übertragen und dort von den Signalempfangsmitteln SEM empfangen. In der Schnurlos-Basisstation BS wird gesteuert durch die Zentrale Steuereinrichtung ZST die empfangene verschlüsselte zurückgewonnene IST-Authentisierungskennung IAK' von den Entschlüsselungsmitteln ESM entschlüsselt und anschließend wieder von den Vergleichsmitteln VM mit der in dem Speicher SP hinterlegten SOLL-Authentisierungskennung SAK verglichen.

Ergibt dieser mit den Vergleichsmitteln VM durchgeführte Vergleich, dass die zurückgewonnene IST-Authentisierungskennung IAK' mit der SOLL-Authentisierungskennung SAK übereinstimmt, also identisch ist, so wird das Schnurlos-Mobilteil MT, OA, HA wie in der FIGUR 3 an der Schnurlos-Basisstation BS registriert. Stimmt hingegen die zurückgewonnene IST-Authentisierungskennung IAK' nicht mit der gespeicherten SOLL-Authentisierungskennung SAK überein, so weist die Schnurlos-Basisstation BS wie in der FIGUR 3 den Registrierungsversuch durch das Schnurlos-Mobilteil MT, OA, HA ab.

Bevor nach einem abgewiesenen Registrierungsversuch die sprachgesteuerte Registrierung endgültig gescheitert ist, wird wieder der Registrierungsversuch vorzugsweise mindestens einmal wiederholt, um gemäß den Ausführungen zu FIGUR 5 eine falsche Kennungseingabe oder den Fall, dass an der Schnurlos-Basisstation BS bereits so viele Schnurlos-Mobilteile MT, OA, HA angemeldet bzw. registriert sind (Erschöpfung des Anmeldungskontingents der Schnurlos-Basisstation), dass kein weiteres Schnurlos-Mobilteil MT, OA, HA mehr an der Schnurlos-Basisstation BS angemeldet werden kann, zu vermeiden.

FIGUR 5 zeigt ein Ablaufdiagramm für das Schnurlos-Mobilteil bezüglich dessen sprachgesteuerter Registrierung bei der Schnurlos-Basisstation BS gemäß den FIGUREN 3 und 4.

In einem ersten Zustand wird in dem Schnurlos-Mobilteil MT, OA, HA die Gesprächstaste GST, die z.B. als "Push2Talk"-Taste ausgebildet sein kann, 20 Sekunden lang gedrückt, wobei infolge dieses Tastendrucks alle zehn Sekunden ein Quittungston ("beep") an den Benutzer gesendet wird.

Infolge dieses Drückens der Gesprächstaste GST befindet sich das Schnurlos-Mobilteil MT, OA, HA in einem zweiten Zustand Z2 in einem Anmeldemodus. In diesem Modus sucht das Schnurlos-Mobilteil MT, OA, HA nach anmeldebereiten Schnurlos-Basisstationen BS. Während dieser Suche wird ein Quittungston an den Benutzer ausgegeben, der als ein sich rhythmisch wiederholender "beep" ausgebildet ist.

In einem dritten Zustand Z3 hat das Schnurlos-Mobilteil MT, OA, HA eine anmeldebereite Schnurlos-Basisstation BS gefunden. In einem sich daran anschließenden vierten Zustand Z4 wird von dem Schnurlos-Mobilteil MT, OA, HA abgefragt, ob die in dem dritten Zustand Z3 gefundene Schnurlos-Basisstation BS eine sprachgesteuerte Registrierung unterstützt. Ist dieses nicht der Fall, so geht es von dem vierten Zustand Z4 wieder zurück zu dem zweiten Zustand Z2, in dem das Schnurlos-Mobilteil MT, OA, HA nach einer weiteren anmeldebereiten Schnurlos-Basisstation BS sucht.

Unterstützt jedoch die in dem dritten Zustand Z3 gefundene anmeldebereite Schnurlos-Basisstation BS die sprachgesteuerte Registrierung, so geht es von dem Abfragezustand Z4 zu einem fünften Zustand Z5, in dem zwischen der Schnurlos-Basisstation BS und dem Schnurlos-Mobilteil MT, OA, HA die Nutzkanalverbindung NKV hergestellt wird. Über diese Nutzkanalverbindung überträgt die Schnurlos-Basisstation BS den Begrüßungstext BT mit dem Wortlaut "Sie möchten Ihr Mobilteil anmelden. Sprechen Sie bitte die PIN-Kennung." an das Schnurlos-Mobilteil MT, OA, HA.

Daran anschließend wird in einem sechsten Zustand Z6 die als PIN-Kennung ausgebildete IST-Authentisierungskennung IAK in das Schnurlos-Mobilteil MT, OA, HA gesprochen. Über die Bedienoberfläche des Schnurlos-Mobilteils MT, OA, HA wird gegebenenfalls eine Wiederholung, eine Quittierung, eine Fehlerbehandlung etc. der gesprochenen Kennungseingabe durchgeführt. In diesem sechsten Zustand Z6 erfolgt weiterhin die Authentisierung, bei der die IST-Authentisierungskennung IAK' mit der SOLL-Authentisierungskennung SAK verglichen wird.

Daran anschließend geht es zu einem siebten Zustand Z7, in dem abgefragt wird, ob die in dem sechsten Zustand Z6 durchgeführte Authentisierung erfolgreich, d.h. ob die IST-Authentisierungskennung IAK' und die SOLL-Authentisierungskennung SAK in dem sechsten Zustand Z6 übereinstimmen, gewesen ist. Ist dies nicht der Fall, also stimmen die IST-Authentisierungskennung IAK' und die SOLL-Authentisierungskennung SAK in dem sechsten Zustand Z6 nicht überein, so geht es in einen achten Zustand Z8, in dem die Abweisung der sprachgesteuerten Registrierung in dem Schnurlos-Mobilteil MT, OA, HA durch einen negativen Quittungston (z.B. beep-beep-beep) angezeigt wird. Die Abweisung der sprachgesteuerten Registrierung des Schnurlos-Mobilteils MT, OA, HA in dem achten Zustand Z8 kann das Ergebnis einer falschen Kennungseingabe im sechsten Zustand Z6 sein oder es ist die Folge davon, dass an der in dem dritten Zustand Z3 gefundenen Schnurlos-Basisstation BS bereits so viele Schnurlos-Mobilteile MT, OA, HA angemeldet bzw. registriert sind (Erschöpfung des Anmeldungskontingents der Schnurlos-Basisstation), dass kein weiteres Schnurlos-Mobilteil MT, OA, HA mehr an der Schnurlos-Basisstation BS angemeldet werden kann. Im ersten genannten Fall geht es von dem achten Zustand Z8 zurück zu dem sechsten Zustand Z6, in dem der Benutzer des Schnurlos-Mobilteils MT, OA, HA eine andere Kennung in das Schnurlos-Mobilteil spricht und damit erneut einen Registrierungsversuch startet. Im letztgenannten Fall geht es von dem achten Zustand Z8 zurück zu dem zweiten Zustand Z2, in dem das Schnurlos-Mobilteil MT, OA, HA nach einer anderen anmeldebereiten Schnurlos-Basisstation BS sucht.

Ist hingegen die Authentisierungsabfrage in dem siebten Zustand Z7 erfolgreich, d.h. stimmen die IST-Authentisierungskennung IAK' und die SOLL-Authentisierungskennung SAK in dem sechsten Zustand Z6 überein, so wird in einem neunten Zustand Z9 in dem Schnurlos-Mobilteil MT, OA, HA ein Hinweistext HT mit dem Wortlaut "Sie sind angemeldet. Sie haben die interne Teilnehmernummer 'xyz'." optisch und/oder akustisch ausgegeben. Dieser Hinweistext HT wird wie der Begrüßungstext BT gemäß den Ausführungen zu den FIGUREN 3 und 4 wieder vorzugsweise von den Texterzeugungsmitteln TEM in der Schnurlos-Basisstation BS erzeugt und von der Luftschnittstelle LSS in der Schnurlos-Basisstation BS über die Nutzkanalverbindung NKV an das Schnurlos-Mobilteil MT, OA, HA übertragen, wo er von der Textausgabevorrichtung TAV ausgegeben wird.

Alternativ ist es aber auch wieder möglich, dass der Hinweistext HAT wie der Begrüßungstext BT bereits in dem Schnurlos-Mobilteil MT, OA, HA defaultmäßig hinterlegt ist und dann, nachdem die Registrierung erfolgt ist, von der Textausgabevorrichtung TAV ausgegeben wird.

FIGUR 6 zeigt den Meldungsfluss beim Meldungsaustausch MA zwischen dem Schnurlos-Mobilteil MT, OA, HA und der Schnurlos-Basisstation BS bezüglich der sprachgesteuerten Registrierung des Schnurlos-Mobilteils MT, OA, HA bei der Schnurlos-Basisstation BS gemäß den FIGUREN 3 und 4. Bei der Darstellung des Meldungsflusses wird sowohl bei dem Schnurlos-Mobilteil MT, OA, HA als auch bei der Schnurlos-Basisstation BS zwischen einer Instanz "Digitale Signalverarbeitung" und einer Instanz "Protokollsteuerung" unterschieden. In Bezug auf den Meldungsaustausch MA zwischen dem Schnurlos-Mobilteil MT, OA, HA und der Schnurlos-Basisstation BS bedeutet dies, dass der für den Meldungsaustausch MA relevante Meldungsfluss zwischen der Instanz "Protokollsteuerung" in dem Schnurlos-Mobilteil MT, OA, HA und der Instanz "Protokollsteuerung" in der Schnurlos-Basisstation BS stattfindet.

Zunächst wird sowohl in dem Schnurlos-Mobilteil MT, OA, HA als auch in der Schnurlos-Basisstation BS der Instanz "Protokollsteuerung" von der Instanz "Digitale Signalverarbeitung" das Herstellen der Anmeldebereitschaft signalisiert. Die Anmeldebereitschaft wird dabei, wie bereits bei der Beschreibung der FIGUR 5 erläutert, beim Schnurlos-Mobilteil MT, OA, HA durch ein längeres Drücken (z.B. 20 Sekunden) der "Push2Talk"-Taste und bei der Schnurlos-Basisstation BS durch das Betätigen der Anmeldetaste hergestellt.

Ist die Instanz "Protokollsteuerung" in dem Schnurlos-Mobilteil MT, OA, HA über das Herstellen der Anmeldebereitschaft informiert worden, so überträgt diese über die Luftschnittstelle LSS in den FIGUREN 3 und 4 eine erste Meldung "ACCESS RIGHTS REQUEST" M1 an die Instanz "Protokollsteuerung" der Schnurlos-Basisstation BS. Mit dieser ersten Meldung M1 stellt sich das Schnurlos-Mobilteil MT, OA, HA bei der Schnurlos-Basisstation BS vor, d.h. es teilt z.B. der Schnurlos-Basisstation BS mit, dass es kein Tastatur-Protokoll unterstützt. Des Weiteren sucht das Schnurlos-Mobilteil MT, OA, HA mit der ersten Meldung M1 im Rahmen der sprachgesteuerten Registrierung bei der Schnurlos-Basisstation BS um Zugriffsrechte bei dieser nach. Die Instanz "Protokollsteuerung" in der Schnurlos-Basisstation BS, die diese erste Meldung M1 empfängt, beantwortet die erste Meldung M1 in Abhängigkeit davon, ob es sich bei der Schnurlos-Basisstation BS um eine Basisstation handelt, die lediglich eine tastaturgesteuerte Registrierung oder die die sprachgesteuerte Registrierung unterstützt, entweder mit einer zweiten Meldung "ACCESS RIGHTS REJECT" M2 oder mit einer dritten Meldung "ACCESS RIGHTS CONFIRM" M3.

Wird von der Instanz "Protokollsteuerung" in der Schnurlos-Basisstation BS die zweite Meldung M2 an die Instanz "Protokollsteuerung" in dem Schnurlos-Mobilteil MT, OA, HA übertragen, so ist gemäß den Ausführungen zu den FIGUREN 3 bis 5 der Registrierungswunsch des Schnurlos-Mobilteils MT, OA, HA beendet, weil die sprachgesteuerte Registrierung von der Schnurlos-Basisstation BS nicht unterstützt wird. Das Schnurlos-Mobilteil MT, OA, HA wird in diesem Fall, wie in den FIGUREN 3 bis 5 beschrieben, solange nach einer anderen anmeldebereiten Schnurlos-Basisstation BS suchen und dabei jeweils die erste Meldung M1 an die Schnurlos-Basisstation BS übertragen, bis es keine andere anmeldebereite Schnurlos-Basisstation BS mehr findet.

Wird hingegen von der Instanz "Protokollsteuerung" in der Schnurlos-Basisstation BS die dritte Meldung M3 an die Instanz "Protokollsteuerung" in dem Schnurlos-Mobilteil MT, OA, HA übertragen, so gesteht die Schnurlos-Basisstation BS mit dieser dritten Meldung M3 dem Schnurlos-Mobilteil MT, OA, HA das Nachsuchen um die Zugriffsrechte zu, weil es die sprachgesteuerte Registrierung unterstützt. Mit dem Übertragen der dritten Meldung M3 von der Schnurlos-Basisstation BS zu dem Schnurlos-Mobilteil MT, OA, HA wird die Instanz "Digitale Signalverarbeitung" sowohl in der Schnurlos-Basisstation BS als auch in dem Schnurlos-Mobilteil MT, OA, HA von der Instanz "Protokollsteuerung" aktiviert. Nach der Aktivierung der Instanz "Digitale Signalverarbeitung" wird zwischen dem Schnurlos-Mobilteil MT, OA, HA und der Schnurlos-Basisstation BS, wie in den FIGUREN 3 bis 5 beschrieben, die Nutzkanalverbindung NKV zur Sprachdatenübertragung hergestellt. Gemäß den Ausführungen zu der FIGUR 3 überträgt das Schnurlos-Mobilteil MT, OA, HA eine von dem Benutzer des Mobilteils gesprochene IST-Authentisierungskennung als Sprachmuster zur Schnurlos-Basisstation BS. In der Instanz "Digitale Signalverarbeitung" in der Schnurlos-Basisstation BS wird aus dem übertragenen Sprachmuster eine zurückgewonnene IST-Authentisierungskennung generiert, die der Instanz "Protokollsteuerung" in der Schnurlos-Basisstation BS übertragen wird. In der Instanz "Protokollsteuerung" wird dann, wie in der FIGUR 3 beschrieben, die zurückgewonnene IST-Authentisierungskennung mit einer SOLL-Authentisierungskennung verglichen.

Stimmt die zurückgewonnene IST-Authentisierungskennung mit der SOLL-Authentisierungskennung überein, sind diese also identisch, so überträgt die Instanz "Protokollsteuerung" in der Schnurlos-Basisstation BS eine vierte Meldung "ACCESS RIGHTS ACCEPT" M4 an die Instanz "Protokollsteuerung" in dem Schnurlos-Mobilteil MT, OA, HA. Mit dieser vierten Meldung M4 erhält das Schnurlos-Mobilteil MT, OA, HA die Zugriffsrechte von der Schnurlos-Basisstation BS.

Stimmen hingegen die zurückgewonnene IST-Authentisierungskennung und die SOLL-Authentisierungskennung nicht überein, so überträgt die Instanz "Protokollsteuerung" in der Schnurlos-Basisstation BS die zweite Meldung "ACCESS RIGHTS REJECT" M2 an die Instanz "Protokollsteuerung" in dem Schnurlos-Mobilteil MT, OA, HA. Mit dieser zweiten Meldung M2 werden die Zugriffsrechte des Schnurlos-Mobilteil MT, OA, HA auf die Schnurlos-Basisstation BS von der Schnurlos-Basisstation BS. verweigert.

## Patentansprüche

1. Verfahren zum Registrieren eines Mobilteils bei einer Basisstation in einem Telekommunikationssystem mit drahtloser Telekommunikation zwischen dem Mobilteil und der Basisstation mit folgenden Merkmalen:
a) Für das Mobilteil (MT, OA, HA) und die Basisstation (BS) wird jeweils die Bereitschaft zum gegenseitigen Anmelden, die so genannte Anmeldebereitschaft, hergestellt,
b) zwischen dem Mobilteil (MT, OA, HA) und der Basisstation (BS) wird im Rahmen einer Feststellungsprozedur durch Meldungsaustausch (MA) festgestellt, ob die Basisstation (BS) eine sprachgesteuerte Registrierung unterstützt und somit das Mobilteil (MT, OA, HA) prinzipiell an der Basisstation (BS) anmeldefähig ist,
c) zwischen dem Mobilteil (MT, OA, HA) und der Basisstation (BS) wird eine für die Sprachdatenübertragung geeignete Nutzkanalverbindung (NKV) hergestellt, wenn die prinzipielle Anmeldefähigkeit festgestellt wird, anderenfalls wird von dem Mobilteil (MT, OA, HA) festgestellt, ob es an einer anderen anmeldebereiten Basisstation (BS) prinzipiell anmeldefähig ist,
d) für eine in das Mobilteil (MT, OA, HA) gesprochene IST-Authentisierungskennung (IAK) wird für die Untersuchung, ob die IST-Authentisiexungskennung (IAK) mit einer SOLL-Authentisierungskennung (SAK) identisch ist, ein zu der gesprochenen IST-Authentisierungskennung (IAK) korrespondierendes Sprachmuster (SPM) analysiert und aus dem Sprachmuster (SPM) eine zurückgewonnene IST-Authentisierungskennung (IAK') erzeugt, die mit der SOLL-Authentisierungskennung (SAK) verglichen wird,
e) das Mobilteil (MT, OA, HA) wird an der Basisstation (BS) registriert, wenn die IST-Authentisierungskennung (IAK) mit der SOLL-Authentisierungskennung (SAK) übereinstimmt, anderenfalls wird der Registrierungsversuch abgewiesen.

2. Verfahren nach Anspruch 1, **dadurch gekennzeichnet, dass**
nach einem abgewiesenen Registrierungsversuch die Registrierung für mindestens einmal wiederholt wird, bevor die Registrierung endgültig gescheitert ist.

3. Verfahren nach Anspruch 1, **dadurch gekennzeichnet, dass**
die Feststellungsprozedur des Mobilteils (MT, OA, HA), ob es an einer anderen anmeldebereiten Basisstation (BS) anmeldefähig ist, solange durchgeführt wird, bis von dem Mobilteil (MT, OA, HA) keine andere anmeldebereite Basisstation (BS) mehr gefunden wird.

4. Verfahren nach Anspruch 1, **dadurch gekenntzeichnet** dass
als Mobilteil (MT, OA, HA) ein akkubetriebener, eine Tastatur oder ein stiftorientiertes Eingabemedium zur Zeicheneingabe aufweisender Schnurlos-Handapparat (HA) und als Basisstation (BS) eine Schnurlos-Basisstation (BS) mit integrierter Akkuladeeinrichtung (ALE) benutzt wird und dass die Anmeldebereitschaft der Schnurlos-Basisstation (BS) und des Schnurlos-Handapparats (HA) durch Einlegen des Schnurlos-Handapparats (HA) in die Akkuladeeinrichtung (ALE) hergestellt wird.

5. Verfahren nach Anspruch 1, **dadurch gekennzeichnet, dass**
als Mobilteil (MT, OA, HA) ein eine Tastatur oder ein stiftorientiertes Eingabemedium zur Zeicheneingabe aufweisender Schnurlos- Handapparat (HA) mit einem Bedienelement zum Beginnen eines Gesprächs (GST), insbesondere einer Gesprächsstarttaste (GST), und als Basisstation (BS) eine Schnurlos-Basisstation (BS) mit Bedienelement zur Herstellung der Anmeldebereitschaft (AT), insbesondere einer Anmeldetaste (AT), benutzt wird und dass die Anmeldebereitschaft der Schnurlos-Basisstation (BS) durch Betätigen des Bedienelementes zur Herstellung der Anmeldebereitschaft (AT) und die des Schnurlos- Handapparats (HA) durch Betätigen des Bedienelementes zum Beginnen eines Gesprächs (GST) hergestellt wird.

6. Verfahren nach Anspruch 1, **dadurch gekennzeichnet, dass**
als Mobilteil (MT, OA, HA) ein Schnurlos-Ohrapparat (OA) mit einem Bedienelement zum Beginnen eines Gesprächs (GST), insbesondere einer Gesprächstaste (GST), und als Basisstation (BS) eine Schnurlos-Besisstation (BS) mit Bedienelement zur Herstellung der Anmeldebereitschaft (AT), insbesondere einer Anmeldetaste (AT), benutzt wird und dass die Anmeldebereitschaft der Schnurlos-Basisstation (BS) durch Betätigen des Bedienelementes zur Herstellung der Anmeldebereitschaft (AT) und die des Schnurlos-Ohrapparats (OA) durch Betätigen des Bedienelementes zum Beginnen eines Gesprächs (GST) hergestellt wird.

7. Verfahren nach Anspruch 1 und 4, **dadurch gekennzeichnet, dass**
der Meldungsaustausch (MA) über Ladekontakte (ALK) in der Akkuladeeinrichtung (ALE) erfolgt, wenn das Schnurlos-Mobilteil (HA) sich in der Akkuladeeinrichtung (ALE) der Schnurlos-Basisstation (BS) befindet.

8. Verfahren nach Anspruch 1, **dadurch gekennzeichnet, dass**
der Meldungsaustausch (MA) über Luftschnittstellen (LSS) in der Basisstation (BS) und in dem Mobilteil (MT, OA, HA) erfolgt.

9. Verfahren nach Anspruch 8, **dadurch gekennzeichnet, dass**
der Meldungsaustausch (MA) daraus besteht, dass eine erste Meldung "ACCESS RIGHTS REQUEST" (M1) vom Mobilteil (MT, OA, HA) zur Basisstation (BS) übertragen wird, mit der sich das Mobilteil (MT, OA, HA) bei der Basisstation (BS) vorstellt und mit der das Mobilteil (MT, OA, HA) bei der Basisstation (BS) um Zugriffsrechte nachsucht und dass entweder eine zweite Meldung "ACCESS RIGHTS REJECT" (M2) von der Basisstation (BS) zum Mobilteil (MT, OA, HA) übertragen wird, mit der die Basisstation (BS) die Zugriffsrechte für das Mobilteil (MT, OA, HA) abweist, wenn die Basisstation (BS) die sprachgesteuerte Registrierung nicht unterstützt oder das Mobilteil (MT, OA, HA ) bereits angemeldet ist oder eine dritte Meldung "ACCESS RIGHTS CONFIRM" (M3) von der Basisstation (BS) zum Mobilteil (MT, OA, HA) übertragen wird, mit der die Basisstation (BS) dem Mobilteil (MT, OA, HA) das Nachsuchen um die Zugriffsrechte zugesteht, wenn die Basisstation (BS) die sprachgesteuerte Registrierung unterstützt.

10. Verfahren nach Anspruch 1, **dadurch gekennzeichnet, dass**
die Nutzkanalverbindung (NKV) von der Basisstation (BS) hergestellt wird.

11. Verfahren nach Anspruch 1 oder 10, **dadurch gekennzeichnet, dass**
mit dem Herstellen der Nutzkanalverbindung (NKV) ein Begrüßungstext "Sie möchten Ihr Mobilteil anmelden. Sprechen Sie bitte die PIN-Kennung." (BT) von der Basisstation (BS) an das Mobilteil (MT, OA, HA) über die Nutzkanalverbindung (NKV) gesendet und von diesem ausgegeben wird.

12. Verfahren nach Anspruch 1, **dadurch gekennzeichnet, dass**
als IST-Authentisierungskennung (IAK), als zurückgewonnene IST-Authentisierungskennung (IAK') und SOLL-Authentisierungskennung (SAK) jeweils eine PIN-Kennung benutzt wird.

13. Verfahren nach Anspruch 1, **dadurch gekennzeichnet, dass**
ein aus der gesprochenen IST-Authentisierungskennung (IAK) erzeugtes, das Sprachmuster (SPM) enthaltendes Kennungssignal (KS) von dem Mobilteil (MT, OA, HA) zur Basisstation (BS) übertragen wird und in der Basisstation (BS) die Untersuchung stattfindet.

14. Verfahren nach Anspruch 1, **dadurch gekennzeichnet, dass**
in dem Mobilteil (MT, OA, HA) das zu der gesprochenen IST-Authentisierungskennung (IAK) korrespondierende Sprachmuster (SPM) analysiert wird und aus dem Sprachmuster (SPM) die zurückgewonnene IST-Authentisierungskennung (IAK') erzeugt wird und dass die zurückgewonnene IST-Authentisierungskennung (IAK') von dem Mobilteil (MT, OA, HA) an die Basisstation (BS) verschlüsselt übertragen wird (IAK"), die die verschlüsselte zurückgewonnene IST-Authentisierungskennung (IAK') entschlüsselt und anschließend mit der SOLL-Authentisierungskennung (SAK) vergleicht.

15. Verfahren nach Anspruch 1, **dadurch gekennzeichnet, dass**
bei Übereinstimmung der zurückgewonnenen IST-Authentisierungskennung (IAK') mit der SOLL-Authentisierungskennung (SAK) eine vierte Meldung "ACCESS RIGHTS ACCEPT" (M4) von der Basisstation (BS) zum Mobilteil (MT, OA, HA) übertragen wird, mit der das Mobilteil (MT, OA, HA) die Zugriffsrechte von der Basisstation (BS) erhält oder bei Nicht-Übereinstimmung der zurückgewonnenen IST-Authentisierungskennung (IAK') mit der SOLL-Authentisierungskennung (SAK) die zweite Meldung "ACCESS RIGHTS REJECT" (M2) von der Basisstation (BS) zum Mobilteil (MT, OA, HA) übertragen wird, mit der dem Mobilteil (MT, OA, HA) die Zugriffsrechte von der Basisstation (BS) verweigert werden.

16. Verfahren nach Anspruch 1 oder 14, **dadurch gekennzeichnet, dass**
bei Übereinstimmung der zurückgewonnenen IST-Authentisierungskennung (IAK') mit der SOLL-Authentisierungskennung (SAK) ein Hinweistext "Sie sind angemeldet. Sie haben die interne Teilnehmernummer 'xyz'." (HT) von der Basisstation (BS) an das Mobilteil (MT, OA, HA) über die Nutzkanalverbindung (NKV) gesendet und von diesem ausgegeben wird.

17. Telekommunikationssystem mit drahtloser Telekommunikation zwischen einem Mobilteil (MT, OA, HA) und einer Basisstation (BS) zum Registrieren des Mobilteils (MT, OA, HA) bei der Basisstation (BS) mit folgenden Merkmalen:
a) Mittel zur Herstellung einer Anmeldebereitschaft (ABM, AT, ALE, ALK, GST) in dem Mobilteil (MT, OA, HA) und in der Basisstation (BS) sind derart ausgebildet, dass bei deren jeweiligen Betätigung das Mobilteil bzw. die Basisstation zum gegenseitigen Anmelden in einen Anmeldebereitschaftsmodus überführbar ist,
b) eine Zentrale Steuereinrichtung (ZST) zur Steuerung von Bedien- und Funktionsabläufen in dem Mobilteil bzw. der Basisstation, mit der Zentralen Steuereinrichtung (ZST) verbundene Signalsendemittel (SSM) und Signalempfangsmittel (SEM) sowie der Zentralen Steuereinrichtung (ZST) zugeordnete Signalauswertemittel (SAM) in dem Mobilteil (MT, OA, HA) und in der Basisstation (BS) sind jeweils eine gemeinsame Funktionseinheit bildend derart ausgebildet, dass
b1) zwischen dem Mobilteil (MT, OA, HA) und der Basisstation (BS) durch Meldungsaustausch (MA) feststellbar ist, ob die Basisstation (BS) eine sprachgesteuerte Registrierung unterstützt und somit das Mobilteil (MT, OA, HA) prinzipiell an der Basisstation (BS) anmeldefähig ist,
b2) zwischen dem Mobilteil (MT, OA, HA) und der Basisstation (BS) eine für die Sprachdatenübertragung geeignete Nutzkanalverbindung (NKV) herstellbar ist, wenn die prinzipielle Anmeldefähigkeit festgestellt wird, anderenfalls stellt das Mobilteil (MT, OA, HA) fest, ob es an einer anderen anmeldebereiten Basisstation (BS) prinzipiell anmeldefähig ist,
c) eine Spracheingabevorrichtung (SEV) und eine mit dieser Vorrichtung verbundene Signalerzeugungseinrichtung (SEE) in dem Mobilteil (MT, OA, HA) sind mit der Zentralen Steuereinrichtung (ZST) in dem Mobilteil (MT, OA, HA) verbunden und derart ausgebildet, dass aus einer in die Spracheingabevorrichtung (SEV) gesprochenen IST-Authentisierungskennung (IAK) ein Kennungssignal (KS) erzeugbar ist, das ein zu der IST-Authentisierungskennung (IAK) korrespondierendes Sprachmuster (SPM) enthält,
d) der Zentralen Steuereinrichtung (ZST) in dem Mobilteil (MT, OA, HA) oder in der Basisstation (BS) zugeordnete Spracherkennungsmittel (SPEM) analysieren das an sie übertragenen, das Sprachmuster (SPM) enthaltende Kennungssignal (BS) und erzeugen aus diesem Sprachmuster (SPM) eine zurückgewonnene IST-Authentisierungskennung (IAK'),
e) der Zentralen Steuereinrichtung (ZST) in der Basisstation (BS) zugeordnete Vergleichsmittel (VM) überprüfen anhand der an sie übertragenen zurückgewonnenen IST-Authentisierungskennung (IAK'), ob die zurückgewonnene IST-Authentisierungskennung (IAK') mit einer SOLL-Authentisierungskennung (SAK) identisch ist,
f) die Zentrale Steuereinrichtung (ZST), die mit der Zentralen Steuereinrichtung (ZST) verbundenen Signalsendemittel (SSM) und Signalempfangsmittel (SEM), die der Zentralen Steuereinrichtung (ZST) zugeordneten Signalauswertemittel (SAM) in dem Mobilteil (MT, OA, HA) und in der Basisstation (BS) und die der Zentralen Steuereinrichtung (ZST) zugeordneten Vergleichsmittel (VM) in der Basisstation (BS) sind eine Funktionseinheit bildend derart ausgebildet, dass das Mobilteil (MT, OA, HA) an der Basisstation (BS) registrierbar ist, wenn die zurückgewonnene IST-Authentisierungskennung (IAK') mit der SOLL-Authentisierungskennung (SAK) übereinstimmt, anderenfalls wird der Registrierungsversuch abgewiesen.

18. Telekommunikationssystem nach Anspruch 17, **dadurch gekennzeichnet, dass**
die Zentrale Steuereinrichtung (ZST), die mit der Zentralen Steuereinrichtung (ZST) verbundenen Signalsendemittel (SSM) und Signalempfangsmittel (SEM), die der Zentralen Steuereinrichtung (ZST) zugeordneten Signalauswertemittel (SAM) in dem Mobilteil (MT, OA, HA) und in der Basisstation (BS) sowie die der Zentralen Steuereinrichtung (ZST) zugeordneten Vergleichsmittel (VM) in der Basisstation (BS) eine gemeinsame Funktionseinheit bildend derart ausgebildet sind, dass nach einem abgewiesenen Registrierungsversuch die Registrierung für mindestens einmal wiederholbar ist, bevor die Registrierung endgültig gescheitert ist.

19. Telekommunikationssystem nach Anspruch 17, **dadurch gekennzeichnet, dass**
die Zentrale Steuereinrichtung (ZST), die mit der Zentralen Steuereinrichtung (ZST) verbundenen Signalsendemittel (SSM) und Signalempfangsmittel (SEM) und die der Zentralen Steuereinrichtung (ZST) zugeordneten Signalauswertemittel (SAM) in dem Mobilteil (MT, OA, HA) zur Feststellung, ob das Mobilteil (MT, OA, HA) an einer anderen anmeldebereiten Basisstation (BS) anmeldefähig ist, derart ausgebildet sind und solange eine gemeinsame Funktionseinheit mit der Zentralen Steuereinrichtung (ZST), den mit der Zentralen Steuereinrichtung (ZST) verbundenen Signalsendemitteln (SSM) und Signalempfangsmitteln (SEM) und den der Zentralen Steuereinrichtung (ZST) zugeordneten Signalauswertemitteln (SAM) in der anderen Basisstation (BS) bilden, bis von dem Mobilteil (MT, OA, HA) keine andere anmeldebereite Basisstation (BS) mehr auffindbar ist.

20. Telekommunikationssystem nach Anspruch 17, **dadurch gekennzeichnet, dass**
das Mobilteil (MT, OA, HA) ein akkubetriebener, ein Tastaturblock oder stiftorientiertes Eingabemedium zur Zeicheneingabe aufweisender Schnurlos-Handapparat (HA) und die Basisstation (BS) eine Schnurlos-Basisstation (BS) mit einer Akkuladeeinrichtung (ALE) ist, wobei die Mittel zum Herstellen der Anmeldebereitschaft (ABM, AT, ALE, ALK, GST) in der Schnurlos-Basisstation (BS) und in dem Schnurlos-Handapparat (HA) derart ausgebildet sind, dass durch Einlegen des Schnurlos-Handapparats (HA) in die Akkuladeeinrichtung (ALE) die Anmeldebereitschaft herstellbar ist.

21. Telekommunikationssystem nach Anspruch 17, **dadurch gekennzeichnet, dass**
das Mobilteil (MT, OA, HA) ein ein Tastaturblock oder stiftorientiertes Eingabemedium zur Zeicheneingabe aufweisender Schnurlos-Handapparat (HA) mit einem Bedienelement zum Beginnen eines Gesprächs (GST), insbesondere einer Gesprächsstarttaste (GST), und die Basisstation (BS) eine Schnurlos-Basisstation (BS) mit einem Bedienelement zur Herstellung der Anmeldebereitschaft (AT) ist, wobei die Mittel zum Herstellen der Anmeldebereitschaft (ABM, AT, ALE, ALK, GST) in der Schnurlos-Basisstation (BS) derart ausgebildet sind, dass die Anmeldebereitschaft der Schnurlos-Basisstation (BS) durch Betätigen des Bedienelementes zur Herstellung der Anmeldebereitschaft (AT) herstellbar ist und wobei die Mittel zum Herstellen der Anmeldebereitschaft (ABM, AT, ALE, ALK, GST) in dem Schnurlos-Handapparat (HA) derart ausgebildet sind, dass die Anmeldebereitschaft des Schnurlos-Handapparats (HA) durch Betätigen des Bedienelementes zum Beginnen eines Gesprächs (GST) herstellbar ist.

22. Telekommunikationssystem nach Anspruch 17, **dadurch gekenntzeichnet**, dass
das Mobilteil (MT, OA, HA) ein Schnurlos-Ohrapparat (OA) mit einem Bedienelement zum Beginnen eines Gesprächs (GST), insbesondere einer Gesprächsstarttaste (GST), und die Basisstation (BS) eine Schnurlos-Basisstation (BS) mit einem Bedienelement zur Herstellung der Anmeldebereitschaft (AT) ist, wobei die Mittel zum Herstellen der Anmeldebereitschaft (ABM, AT, ALE, ALK, GST) in der Schnurlos-Basisstation (BS) derart ausgebildet sind, dass die Anmeldebereitschaft der Schnurlos-Basisstation (BS) durch Betätigen des Bedienelementes zur Herstellung der Anmeldebereitschaft (AT) herstellbar ist und wobei die Mittel zum Herstellen der Anmeldebereitschaft (ABM, AT, ALE, ALK, GST) in dem Schnurlos-Ohrapparat (OA) derart ausgebildet sind, dass die Anmeldebereitschaft des Schnurlos-Ohrapparats (OA) durch Betätigen des Bedienelementes zum Beginnen eines Gesprächs (GST) herstellbar ist.

23. Telekommunikationssystem nach Anspruch 17 und 20, **dadurch gekennzeichnet, dass**
die Zentrale Steuereinrichtung (ZST), die mit der Zentralen Steuereinrichtung (ZST) verbundenen Signalsendemittel (SSM) und Signalempfangsmittel (SEM), die der Zentralen Steuereinrichtung (ZST) zugeordneten Signalauswertemittel (SAM) in dem Schnurlos-Handapparat (HA) und in der Schnurlos-Basisstation (BS) eine gemeinsame Funktionseinheit bildend derart ausgebildet sind, dass der Meldungsaustausch (MA) über Ladekontakte (ALK) in der Akkuladeeinrichtung (ALE) erfolgt, wenn der Schnurlos-Handapparat (HA) sich in der Akkuladeeinrichtung (ALE) der Schnurlos-Basisstation (BS) befindet.

24. Telekommunikationssystem nach Anspruch 17, **dadurch gekennzeichnet, dass**
die Zentrale Steuereinrichtung (ZST), die mit der Zentralen Steuereinrichtung (ZST) verbundenen Signalsendemittel (SSM) und Signalempfangsmittel (SEM), die der Zentralen Steuereinrichtung (ZST) zugeordneten Signalauswertemittel (SAM) in dem Mobilteil (MT, OA, HA) und in der Basisstation (BS) eine gemeinsame Funktionseinheit bildend derart ausgebildet sind, dass der Meldungsaustausch (MA) über Luftschnittstellen (LSS) in der Basisstation (BS) und in dem Mobilteil (MT, OA, HA) erfolgt.

25. Telekommunikationssystem nach Anspruch 24, **dadurch gekennzeichnet, dass**
die Zentrale Steuereinrichtung (ZST), die mit der Zentralen Steuereinrichtung (ZST) verbundenen Signalsendemittel (SSM) und Signalempfangsmittel (SEM), die der Zentralen Steuereinrichtung (ZST) zugeordneten Signalauswertemittel (SAM) in dem Mobilteil (MT, OA, HA) und in der Basisstation (BS) eine gemeinsame Funktionseinheit bildend derart ausgebildet sind, dass der Meldungsaustausch (MA) daraus besteht, dass eine erste Meldung "ACCESS RIGHTS REQUEST" (M1) vom Mobilteil (MT, OA, HA) zur Basisstation (BS) übertragbar ist, mit der sich das Mobilteil (MT, OA, HA) bei der Basisstation (BS) vorstellt und mit der das Mobilteil (MT, OA, HA) bei der Basisstation (BS) um Zugriffsrechte nachsucht und dass entweder eine zweite Meldung "ACCESS RIGHTS REJECT" (M2) von der Basisstation (BS) zum Mobilteil (MT, OA, HA) übertragbar ist, mit der die Basisstation (BS) die Zugriffsrechte für das Mobilteil (MT, OA, HA) abweist, wenn die Basisstation (BS) die sprachgesteuerte Registrierung nicht unterstützt oder das Mobilteil (MT, OA, HA) bereits angemeldet ist oder eine dritte Meldung "ACCESS RIGHTS CONFIRM" (M3) von der Basisstation (BS) zum Mobilteil (MT, OA, HA) übertragbar ist, mit der die Basisstation (BS) dem Mobilteil (MT, OA, HA) das Nachsuchen der Zugriffsrechte zugesteht, wenn die Basisstation (BS) die sprachgesteuerte Registrierung unterstützt.

26. Telekommunikationssystem nach Anspruch 17, **dadurch gekennzeichnet, dass**
die Zentrale Steuereinrichtung (ZST) und die mit der Zentralen Steuereinrichtung (ZST) verbundenen Signalsendemittel (SSM) und Signalempfangsmittel (SEM) in der Basisstation (BS) derart ausgebildet sind, dass die Nutzkanalverbindung (NKV) von der Basisstation (BS) herstellbar ist.

27. Telekommunikationssystem nach Anspruch 17 oder 26, **dadurch gekennzeichnet, dass**
der Zentralen Steuereinrichtung (ZST) in der Basisstation (BS) zugeordnete Texterzeugungsmittel (TEM), die Zentrale Steuereinrichtung (ZST) und die mit der Zentralen Steuereinrichtung (ZST) verbundenen Signalsendemittel (SSM) in der Basisstation (BS) sowie eine der Zentralen Steuereinrichtung (ZST) in dem Mobilteil (MT, OA, HA) zugeordneten Textausgabevorrichtung (TAV), die Zentrale Steuereinrichtung (ZST) und die mit der Zentralen Steuereinrichtung (ZST) verbundenen Signalempfangsmittel (SEM) in dem Mobilteil (MT, OA, HA) eine gemeinsame Funktionseinheit bildend derart ausgebildet sind, dass mit dem Herstellen der Nutzkanalverbindung (NKV) ein Begrüßungstext "Sie möchten Ihr Mobilteil anmelden. Sprechen Sie bitte die PIN-Kennung." (BT) von der Basisstation (BS) an das Mobilteil (MT, OA, HA) über die Nutzkanalverbindung (NKV) sendbar und von diesem über die Textausgabevorrichtung (TAV) ausgebbar ist.

28. Telekommunikationssystem nach Anspruch 17, **dadurch gekennzeichnet, dass**
die IST-Authentisierungskennung (IAK), die zurückgewonnene IST-Authentisierungskennung (IAK') und die SOLL-Authentisierungskennung (SAK) PIN-Kennungen sind.

29. Telekommunikationssystem nach Anspruch 17, **dadurch gekennzeichnet, dass**
die in der Basisstation (BS) angeordneten Spracherkennungsmittel (SPEM), die mit den Spracherkennungsmittel (SPEM) verbundenen Vergleichsmittel (VM), die Zentrale Steuereinrichtung (ZST) und die Signalempfangsmittel (SEM) in der Basisstation (BS) sowie die Spracheingabevorrichtung (SEV), die Signalerzeugungseinrichtung (SEE), die Zentrale Steuereinrichtung (ZST) und die Signalsendemittel (SSM) in dem Mobilteil (MT, OA, HA) eine Funktionseinheit bildend derart ausgebildet sind, dass, das Kennungssignal (KS) von der Signalerzeugungseinrichtung (SEE) in dem Mobilteil (MT, OA, HA) zu den Spracherkennungsmittel (SPEM) in der Basisstation (BS) übertragbar ist.

30. Telekommunikationssystem nach Anspruch 17, **dadurch gekennzeichnet, dass**
die in dem Mobilteil (MT, OA, HA) angeordneten Spracherkennungsmittel (SPEM), die Spracheingabevorrichtung (SEV), die Signalerzeugungseinrichtung (SEE), die Zentrale Steuereinrichtung (ZST), der Zentralen Steuereinrichtung (ZST) zugeordnete Verschlüsselungsmitteln (VSM) und die Signalsendemitteln (SSM) in dem Mobilteil (MT, OA, HA) sowie die Zentrale Steuereinrichtung (ZST), die Signalempfangsmittel (SEM), die Vergleichsmittel (VM) und der Zentralen Steuereinrichtung (ZST) zugeordnete Entschlüsselungsmittel (ESM) in der Basisstation (BS) eine Funktionseinheit bildend derart ausgebildet sind, dass die zurückgewonnene IST-Authentisierungskennung (IAK') von den Verschlüsselungsmitteln (VSM) in dem Mobilteil (MT, OA, HA) an die Entschlüsselungsmittel (ESM) in der Basisstation (BS) verschlüsselt übertragbar ist (IAK"), die die verschlüsselte zurückgewonnene IST-Authentisierungskennung (IAK') entschlüsselt und anschließend an die Vergleichsmittel (VM) weiterleiten.

31. Telekommunikationssystem nach Anspruch 17, **dadurch gekennzeichnet, dass**
die Zentrale Steuereinrichtung (ZST), die mit der Zentralen Steuereinrichtung (ZST) verbundenen Signalsendemittel (SSM) und Signalempfangsmittel (SEM), die der Zentralen Steuereinrichtung (ZST) zugeordneten Signalauswertemittel (SAM) in dem Mobilteil (MT, OA, HA) und in der Basisstation (BS) sowie die Vergleichsmittel (VM) eine gemeinsame Funktionseinheit bildend derart ausgebildet sind, dass bei Übereinstimmung der zurückgewonnenen IST-Authentisierungskennung (IAK') mit der SOLL-Authentisierungskennung (SAK) eine vierte Meldung "ACCESS RIGHTS ACCEPT" (M4) von der Basisstation (BS) zum Mobilteil (MT, OA, HA) übertragbar ist, mit der das Mobilteil (MT, OA, HA) die Zugriffsrechte von der Basisstation (BS) erhält.

32. Telekommunikationssystem nach Anspruch 17 oder 27, **dadurch gekennzeichnet, dass**
der Zentralen Steuereinrichtung (ZST) in der Basisstation (BS) zugeordnete Texterzeugungsmittel (TEM), die Zentrale Steuereinrichtung (ZST), die Vergleichsmittel (VM) und die mit der Zentralen Steuereinrichtung (ZST) verbundenen Signalsendemittel (SSM) in der Basisstation (BS) sowie die der Zentralen Steuereinrichtung (ZST) in dem Mobilteil (MT, OA, HA) zugeordnete Textausgabevorrichtung (TAV), die Zentrale Steuereinrichtung (ZST) und die mit der Zentralen Steuereinrichtung (ZST) verbundenen Signalempfangsmittel (SEM) in dem Mobilteil (MT, OA, HA) eine Funktionseinheit bildend derart ausgebildet sind, dass bei Übereinstimmung der zurückgewonnenen IST-Authentisierungskennung (IAK') mit der SOLL-Authentisierungskennung (SAK) ein Hinweistext "Sie sind angemeldet. Sie haben die interne Teilnehmernummer 'xyz'." (HT) von der Basisstation (BS) an das Mobilteil (MT, OA, HA) über die Nutzkanalverbindung (NKV) sendbar und von diesem über die Textausgabevorrichtung (TAV) ausgebbar ist.

## Claims

1. Method for registering a mobile part at a base station in a telecommunications system performing a wireless telecommunication between the mobile part and the base station, comprising the following features:
a) for each of the mobile part (MT', OA, HA) and the base station (BS) is established a readiness for mutual registration, the so-called readiness for registration:
b) between the mobile part (MT, OA, HA) and the base station is determined within the frame of a determining procedure by message exchange whether the base station (BS) supports a voice controlled registration and thus the mobile part (MT, OA, HA) is principally capable of being registered at the base station (BS);
c) between the mobile part (MT, OA, HA) and the base station (BS) an appropriate bearer channel connection (NKV) for the voice data transmission is established, if the principal registering capability is determined, otherwise the mobile part (MT, OA, HA) determines whether it is principally capable of being registered at another base station (BS) which is ready for registration;
d) with respect to a current authentication code (IAK) spoken into the mobile part (MT, OA, HA) a voice pattern (SPM) corresponding to the spoken current authentication code (IAK) is analyzed in order to investigate whether the current authentication code (IAK) is identical to a target authentication code (SAK), and a recovered current authentication code (IAK') is generated from the voice pattern (SPM) and is compared with the target authentication code (SAK);
e) the mobile part (MT, OA, HA) is registered at the base station (BS), if the current authentication code (IAK) matches with the target authentication code (SAK), otherwise the registration attempt is rejected.

2. Method according to claim 1, **characterized in that**
after a rejected registration attempt the registration is repeated at least once before the registration is ultimately terminated.

3. Method according to claim 1, **characterized in that**
the determining procedure of the mobile part (MT, OA, HA) whether it is capable of being registered at another base station (BS) which is ready for registration is executed until no further base station (BS) which is ready for registration is found by the mobile part (MT, OA, HA).

4. Method according to claim 1, **characterized in that**
a battery operated cordless handset (HA) comprising a keypad or a pin oriented input medium for character input is used as the mobile part (MT, OA, HA), and a cordless base station (BS) comprising an integrated battery charger (ALE) is used as the base station (BS); and
that the readiness for registration of the cordless base station (BS) and the cordless handset (HA) is established by placing the cordless handset (HA) in the battery charger (ALE).

5. Method according to claim 1, **characterized in that**
a cordless handset (HA) comprising a keypad or a pin oriented input medium for character input including an operating element for starting a call (GST), particularly a call start button (GST), is used as the mobile part (MT, OA, HA), and a cordless base station (BS) comprising an operating element for establishing the readiness for registration (AT), particularly a registration button (AT), is used as the base station (BS); and
that the readiness for registration of the cordless base station (BS) is established by actuating the operating element for establishing the readiness for registration (AT) and that of the cordless handset (HA) is established by actuating the operating element for starting a call (GST).

6. Method according to claim 1, **characterized in that**
a cordless earset (OA) comprising an operating element for starting a call (GST), particularly a call start button (GST), is used as the mobile part (MT, OA, HA) and a cordless base station (BS) comprising an operating element for establishing the readiness for registration (AT), particularly a registration button (AT), is used as the base station (BS); and
that the readiness for registration of the cordless base station (BS) is established by actuating the operating clement for establishing the readiness for registration (AT) and that of the cordless earset (OA) is established by actuating the operating element for starting a call (GST).

7. Method according to claims 1 and 4, **characterized in that**
the message exchange (MA) is implemented over charging contacts (ALK) of the battery charger (ALE) when the cordless mobile part (HA) is placed in the battery charger (ALE) of the cordless base station (BS).

8. Method according to claim 1, **characterized in that**
the message exchange (MA) is implemented over air interfaces (LSS) in the base station (BS) and in the mobile part (MT, OA, HA).

9. Method according to claim 8, **characterized in that**
the message exchange (MA) consists **in that** a first message "ACCESS RIGHTS REQUEST" (M1) is transmitted from the mobile part (MT, OA, HA) to the base station (BS) by means of which the mobile part (MT, OA, HA) introduces itself at the base station (BS) and by means of which the mobile part (MT, OA, HA) requests for access rights at the base station (BS); and
that either a second message "ACCESS RIGHTS REJECT" (M2) is transmitted from the base station (BS) to the mobile part (MT, OA, HA) by means of which the base station (BS) rejects the access rights for the mobile part (MT, OA, HA), when the base station (BS) does not support the voice controlled registration or the mobile part (MT, OA, HA) is already registered, or a third message "ACCESS RIGHTS CONFIRM" (M3) is transmitted from the base station (BS) to the mobile part (MT, OA, HA), by means of which the base station (BS) grants the request for the access rights for the mobile part (MT, OA, HA), when the base station (BS) supports the voice controlled registration.

10. Method according to claim 1, **characterized in that** the bearer channel connection (NKV) is established by the base station (BS).

11. Method according to claim 1 or 10, **characterized in that**
after the bearer channel connection (NKV) is established a welcome text "You want to register your mobile part. Please input the PIN code by voice." (BT) is transmitted from the base station (BS) to the mobile part (MT, OA, HA) over the bearer channel connection (NKV) and is output therefrom.

12. Method according to claim 1, **characterized in that**
a PIN code is used respectively for the current authentication code (IAK), the recovered current authentication code (IAK') and the target authentication code (SAK).

13. Method according to claim 1, **characterized in that**
an identification signal (KS) including the voice pattern (SPM), which is generated from the spoken current authentication code (IAK), is transmitted from the mobile part (MT, OA, HA) to the base station (BS); and
that the investigation is implemented within the base station (BS).

14. Method according to claim 1, **characterized in that**
the voice pattern (SPM) corresponding to the spoken current authentication code (IAK) is analyzed within the mobile part (MT, OA, HA) and the recovered current authentication code (IAK') is generated from the voice pattern (SPM); and
that the recovered current authentication code (IAK') is transmitted in an encoded form (IAK") from the mobile part (MT, OA, HA) to the base station (BA) which decodes the encoded recovered current authentication code (IAK') and subsequently compares it with the target authentication code (SAK).

15. Method according to claim 1, **characterized in that**
if the recovered current authentication code (IAK') matches with the target authentication code (SAK) a forth message "ACCESS RIGHTS ACCEPT" (M4) is transmitted from the base station (BS) to the mobile part (MT, OA, HA), by means of which the mobile part (MT, OA, HA) obtains the access rights from the base station (BS) or, when the recovered current authentication code (IAK') does not match with the target authentication code (SAK) the second message "ACCESS RIGHTS REJECT" (M2) is transmitted from the base station (BS) to the mobile part (MT, OA, HA), by means of which the base station (BS) rejects the access rights for the mobile part (MT, OA, HA).

16. Method according to claim 1, **characterized in that**
if the recovered current authentication code (IAK') matches with the target authentication code (SAK) a notice "You are registered. You have the internal subscriber number 'xyz'." (HT) is transmitted from the base station (BS) to the mobile part (MT, OA, HA) over the bearer channel connection (NKV) and is output therefrom.

17. Telecommunications system performing wireless telecommunication between a mobile part (MT, OA, HA) and the base station (BS) for registering the mobile part (MT, OA, HA) at the base station (BS), comprising the following features:
a) means for establishing a readiness for registration (ABM, AT, ALE, ALK, GST) in the mobile part (MT, OA, HA) and in the base station (BS) are configured such that, when they are respectively actuated the mobile part and the base station, respectively, can be switched into a readiness for registration mode for mutual registration;
b) a central control means (ZST) for controlling the operational and functional processes in the mobile part and in the base station, respectively, signal transmission means (SSM) and signal reception means (SEM) connected to the central control means (ZST) as well as signal evaluation means (SAM) associated to the central control means (ZST) in the mobile part (MT, OA, HA) and in the base station (BS) are respectively configured as a common functional unit such that
b1) between the mobile part (MT, OA, HA) and the base station (BS) it can be determined by message exchange (MA) whether the base station (BS) supports a voice controlled registration such that the mobile part (MT, OA, HA) is principally capable of being registered at the base station (BS);
b2) between the mobile part (MT, OA, HA) and the base station (BS) a bearer channel connection (NKV) appropriate for the voice data transmission can be established, if the principal registration capability is determined, otherwise the mobile part (MT, OA, HA) determines whether it is principally capable of being registered at another base station (BS) which is ready for registration;
c) a voice input means (SEV) and a signal generating means (SEE) connected to the voice input means in the mobile part (MT, OA, HA) are connected to the central control means (ZST) in the mobile part (MT, OA, HA) and configured such that a code signal (KS) can be generated from a current authentication code (IAK) spoken into the voice input means (SEV), wherein the code signal includes a voice pattern (SPM) corresponding to the current authentication code (IAK);
d) voice recognition means (SPEM) associated to the central control means (ZST) in the mobile part (MT, OA, HA) or in the base station (BS) analyze the code signal (KS) including the voice pattern (SPM) which is transmitted to them and generate a recovered current authentication code (IAK') from this voice pattern (SPM);
e) comparing means (VM) associated to the central control means (ZST) in the base station (BS) check based on the recovered current authentication code (IAK') transmitted to them whether the recovered authentication code (IAK') matches with the target authentication code (SAK);
f) the central control means (ZST), the signal transmission means (SSM) and signal reception means (SEM) connected to the central control means (ZST), the signal evaluation means (SAM) associated to the central control means (ZST) in the mobile part (MT, OA, HA) and in the base station (BS) and the comparing means (VM) associated to the central control means (ZST) in the base station (BS) are configured as a functional unit, such that the mobile part (MT, OA, HA) can be registered at the base station (BS), if the recovered current authentication code (IAK') matches with the target authentication code (SAK), otherwise the registration attempt is rejected.

18. Telecommunications system according to claim 17, **characterized in that**
the central control means (ZST), the signal transmission means (SSM) and signal reception means (SEM) connected to the central control means (ZST), the signal evaluation means (SAM) associated to the central control means (ZST) in the mobile part (MT, OA, HA) and in the base station (BS) as well as the comparing means (VM) associated to the central control means (ZST) in the base station (BS) arc configured as a common functional unit, such that after a rejected registration attempt the registration can be repeated at least once before the registration is ultimately terminated.

19. Telecommunications system according to claim 17, **characterized in that**
the central control means (ZST), the signal transmission means (SSM) and signal reception means (SEM) connected to the central control means (ZST) and the signal evaluation means (SAM) associated to the central control means (ZST) in the mobile part (MT, OA, HA) in order to determine whether the mobile part (MT, OA, HA) is capable of being registered at another base station (BS) which is ready for registration are configured such and form a common functional unit with the central control means (ZST), the signal transmission means (SSM) and the signal reception means (SEM) connected to the central control means (ZST) and the signal evaluation means (SAM) associated to the central control means (ZST) in the other base station (BS) until no further base station (BS) which is ready for registration can be found by the mobile part (MT, BA, HA).

20. Telecommunications system according to claim 17, **characterized in that**
the mobile part (MT, OA, HA) is a battery operated cordless handset (HA) comprising a keypad or a pin oriented input medium for character input, and the base station (BS) is a cordless base station (BS) comprising a battery charger (ALE), wherein the means for establishing the readiness for registration (ABM, AT, ALE, ALK, GST) in the cordless base station (BS) and in the cordless handset (HA) are configured such that by placing the cordless handset (HA) in the battery charger (ALE) the readiness for registration is established.

21. Telecommunications system according to claim 17, **characterized in that**
the mobile part (MT, OA, HA) is a cordless handset (HA) comprising a keypad or a pin oriented input medium for character input including an operating clement for starting a call (GST), particularly a call start button (GST), and the base station (BS) is a cordless base station (BS) comprising an operating element for establishing the readiness for registration (AT), wherein the means for establishing the readiness for registration (ABM, AT, ALE, ALK, GST) in the cordless base station (BS) are configured such that the readiness for registration of the cordless base station (BS) can be established by actuating the operating element for establishing the readiness for registration (AT), and wherein the means for establishing the readiness for registration (ABM, AT, ALE, ALK, GST) in the cordless handset (HA) are configured such that the readiness for registration of the cordless handset (HA) can be established by actuating the operating element for starting a call (GST).

22. Telecommunications system according to claim 17, **characterized in that**
the mobile part (MT, OA, HA) is a cordless earset (OA) comprising an operating element for starting a call (GST), particularly a call start button (GST), and the base station (BS) is a cordless base station (BS) comprising an operating element for establishing the readiness for registration (AT), wherein the means for establishing the readiness for registration (ABM, AT, ALE, ALK, GST) in the cordless base station (BS) are configured such that the readiness for registration (AT) of the cordless base station (BS) can be established by actuating the operating element for establishing the readiness for registration (AT), and wherein the means for establishing the readiness for registration (ABM, AT, ALE, ALK, GST) in the cordless earset (OA) arc configured such that the readiness for registration of the cordless earset (OA) can be established by actuating the operating element for starting a call (GST).

23. Telecommunications system according to claim 17 and 20, **characterized in that**
the central control means (ZST), the signal transmission means (SSM) and signal reception means (SEM) connected to the central control means (ZST), the signal evaluation means (SAM) associated to the central control means (ZST) in the cordless handset (HA) and in the base station (BS) are configured as a common functional unit such that the message exchange (MA) is implemented over charging contacts (ALK) in the battery charger (ALE), when the cordless handset (HA) is placed in the battery charger (ALE) of the cordless base station (BS).

24. Telecommunications system according to claim 17, **characterized in that**
the central control means (ZST), the signal transmission means (SSM) and signal reception means (SEM) connected to the central control means (ZST), the signal evaluation means (SAM) associated to the central control means (ZST) in the mobile part (MT, OA, HA) and in the base station (BS) are configured as a common functional unit such that the message exchange (MA) is implemented over air interfaces (LSS) in the base station (BS) and in the mobile part (MT, OA, HA).

25. Telecommunications system according to claim 24, **characterized in that**
the central control means (ZST), the signal transmission means (SSM) and signal reception means (SEM) connected to the central control means (ZST), the signal evaluation means (SAM) associated to the central control means (ZST) in the mobile part (MT, OA, HA) and in the base station (BS) are configured as a common functional unit such that the message exchange (MA) consists **in that** a first message "ACCESS RIGHTS REQUEST" (M1) can be transmitted from the mobile part (MT, OA, HA) to the base station (BS) by means of which the mobile part (MT, OA, HA) introduces itself at the base station (BS) and by means of which the mobile part (MT, OA, HA) requests for access rights at the base station (BS), and either a second message "ACCESS RIGHTS REJECT" (M2) can be transmitted from the base station (BS) to the mobile part (MT, OA, HA) by means of which the base station (BS) rejects the access rights for the mobile part (MT, OA, HA), when the base station (BS) does not support the voice controlled registration or the mobile part (MT, OA, HA) is already registered, or a third message "ACCESS RIGHTS CONFIRM" (M3) can be transmitted from the base station (BS) to the mobile part (MT, OA, HA), by means of which the base station (BS) grants the request for the access rights for the mobile part (MT, OA, HA), when the base station (BS) supports the voice controlled registration.

26. Telecommunications system according to claim 17, **characterized in that**
the central control means (ZST) and the signal transmission means (SSM) and signal reception means (SEM) connected to the central control means (ZST) in the base station (BS) are configured such that the bearer channel connection (NKV) can be established by the base station (BS).

27. Telecommunications system according to claim 17 or 26, **characterized in that**
text generating means (TEM) associated to the central control means (ZST) in the base station (BS), the central control means (ZST) and the signal transmission means (SSM) connected to the central control means (ZST) in the base station (BS) as well as a text output means (TAV) associated to the central control means (ZST) in the mobile part (MT, HA, OA), the central control means (ZST) and the signal reception means (SEM) connected to the central control means (ZST) in the mobile part (MT, HA, OA) are configured as a common functional unit such that with establishing a bearer channel connection (NKV) a welcome text "You want to register your mobile part. Please input the PIN code by voice." (BT) can be transmitted from the base station (BS) to the mobile part (MT, OA, HA) over the bearer channel connection (NKV) and can be output therefrom over the text output means (TAV).

28. Telecommunications system according to claim 17, **characterized in that**
the current authentication code (IAK), the recovered current authentication code (IAK') and the target authentication code (SAK) are PIN codes,

29. Telecommunications system according to claim 17, **characterized in that**
the voice recognition means (SPEM) arranged in the base station (BS), the comparing means (VM) connected to the voice recognition means (SPEM), the central control means (ZST) and the signal reception means (SEM) in the base station (BS) as well as the voice input means (SEV), the signal generating means (SEE), the central control means (ZST) and the signal transmission means (SSM) in the mobile part (MT, OA, HA) are configured as a functional unit such that the identification signal (KS) from the signal generating means (SEE) in the mobile part (MT, OA, HA) can be transmitted to the voice recognition means (SPEM) in the base station (BS).

30. Telecommunications system according to claim 17, **characterized in that**
the voice recognition means (SPEM) arranged in the mobile part (MT, OA, HA), the voice input means (SEV), die signal generating means (SEE), the central control means (ZST), the encoding means (VSM) associated to the central control means (ZST) and the signal transmission means (SSM) in the mobile part (MT, OA, HA) as well as the central control means (ZST), the signal reception means (SEM), the comparing means (VM) and the decoding means (ESM) associated to the central control means (ZST) in the base station (BS) are configured as a functional unit such that the recovered current authentication code (IAK') from the encoding means (VSM) in the mobile part (MT, OA, HA) can be transmitted in an encoded form (IAK") to the decoding means (ESM) in the base station (BS), which decodes the encoded recovered current authentication code (IAK') and then forwards the decoded code to the comparing means (VM).

31. Telecommunications system according to claim 17, **characterized in that**
the central control means (ZST), the signal transmission means (SSM) and signal reception means (SEM) connected to the central control means (ZST), the signal evaluation means (SAM) associated to the central control means (ZST) in the mobile part (MT, OA, HA) and in the base station (BS) as well as the comparing means (VM) are configured as a common functional unit such that, when the recovered current authentication code (IAK') matches with the target authentication code (SAK) a forth message "ACCESS RIGHTS ACCEPT" (M4) can be transmitted from the base station (BS) to the mobile part (MT, OA, HA), by means of which the mobile part (MT, OA, HA) obtains the access rights from the base station (BS).

32. Telecommunications system according to claim 17 or 27. **characterized in that**
text generating means (TEM) associated to the central control means (ZST) in the base station (BS), the central control station (ZST), the comparing means (VM) and the signal transmission means (SSM) connected to the central control means (ZST) in the base station (BS) as well as the text output means (TAV) associated to the central control means (ZST) in the mobile part (MT, OA, HA), the central control means (ZST) and the signal reception means (SEM) connected to the central control means (ZST) in the mobile part (MT, OA, HA) are configured as a functional unit such that, when the recovered current authentication code (IAK') matches with the target authentication code (SAK), a notice "You are registered, You have the internal subscriber number 'xyz'." (HT) can be transmitted from the base station (BS) to the mobile part (MT, OA. HA) over the bearer channel connection (NKV) and can be output therefrom over the text output means (TAV).

## Revendications

1. Procédé pour enregistrer une partie mobile auprès d'une station de base dans un système de télécommunication à télécommunication sans fil entre la partie mobile et la station de base, avec les caractéristiques suivantes :
a) pour la partie mobile (MT. OA, HA) et pour la station de base (BS), à chaque fois la disponibilité pour la connexion mutuelle, communément appelée disponibilité pour connexion, est établie,
b) entre la partie mobile (MT, OA, HA) et la station de base (BS), on détermine dans le cadre d'une procédure de détermination par échange de messages (MA) si la station de base (BS) supporte un enregistrement à commande vocale et si la partie mobile (MT, OA, HA) est ainsi en principe capable d'être connectée à la station de base (BS),
c) entre la partie mobile (MT, OA, HA) et la station de base (BS), une liaison à canal d'utilisation (NKV) convenant à la transmission de données vocales est établie, lorsque la capacité de principe d'être connectée est déterminée, sinon la partie mobile (MT, OA, HA) détermine si elle est en principe capable d'être connectée à une autre station de base (BS) disponible pour une connexion,
d) pour un identificateur d'authentification RÉEL (IAK) énoncé dans la partie mobile (MT, OA, HA), pour l'exam si l'identificateur d'authentification RÉEL (IAK) est identique à un identificateur d'authentification de CONSIGNE (SAK), un modèle vocal (SPM) correspondant à l'identificateur d'authentification RÉEL (IAK) énoncé est analysé et, à partir du modèle vocal (SPM), un identificateur d'authentification RÉEL récupéré (IAK'), qui est comparé à l'identificateur d'authentification de CONSIGNE (SAK), est généré,
e) la partie mobile (MT, OA, HA) est enregistrée auprès de la station de base (BS) si l'identificateur d'authentification RÉEL (IAK) coïncide avec l'identificateur d'authentification de CONSIGNE (SAK), sinon la tentative d'enregistrement est rejetée.

2. Procédé selon la revendication 1, **caractérisé en ce que**, après une tentative d'enregistrement rejetée, l'enregistrement est répété au moins une fois avant que l'enregistrement a définitivement échoué,

3. Procédé selon la revendication 1, **caractérisé en ce que** la procédure de détermination de la partie mobile (MT, OA, HA) si elle est capable d'être connectée à une autre station de base (BS) disponible pour une connexion est exécutée jusqu'à ce que la partie mobile (MT, OA, HA) ne trouve plus d'autre station de base (BS) disponible pour une connexion.

4. Procédé selon la revendication 1, **caractérisé en ce que**, comme partie mobile (MT, OA, HA), un combiné sans fil (HA) est utilisé fonctionnant sur batterie et comportant un clavier ou un moyen d'entrée à base de stylet pour l'entrée de caractères et, comme station de base (BS), une station de base sans fil (BS) avec chargeur de batterie intégré (ALE) est utilisée et **en ce que** la disponibilité pour une connexion de la station de base sans fil (BS) et du combiné sans fil (HA) est établie en plaçant le combiné sans fil (HA) dans le chargeur de batterie (ALE).

5. Procédé selon la revendication 1, **caractérisé en ce que**, comme partie mobile (MT, OA, HA), un combiné sans fil (HA) est utilisé comportant un clavier ou un moyen d'entrée à base de stylet pour l'entrée de caractères avec un élément de commande pour le commencement d'une conversation (GST), en particulier une touche de début de conversation (GST), et, comme station de base (BS), une station de base sans fil (BS) avec un élément de commande pour l'établissement de la disponibilité pour une connexion (AT), en particulier une touche d'enregistrement (AT), est utilisée, et **en ce que** la disponibilité pour une connexion de la station de base sans fil (BS) est établie en actionnant l'élément de commande pour l'établissement de la disponibilité pour une connexion (AT), et celle du combiné sans fil (HA) en actionnant l'élément de commande pour le commencement d'une conversation (GST).

6. Procédé selon la revendication 1, **caractérisé en ce que**, comme partie mobile (MT, OA, HA), une oreillette sans fil (OA) avec un élément de commande pour le commencement d'une conversation (GST), en particulier une touche de conversation (GST), est utilisée, et, comme station de base (BS), une station de base sans fil (BS) avec un élément de commande pour l'établissement de la disponibilité pour une connexion (AT), en particulier une touche d'enregistrement (AT), est utilisée, et **en ce que** la disponibilité pour une connexion de la station de base sans fil (BS) est établie en actionnant l'élément de commande pour l'établissement de la disponibilité pour une connexion (AT) et celle de l'oreillette sans fil (OA) en actionnant l'élément de commande pour le commencement d'une conversation (GST).

7. Procédé selon les revendications 1 et 4, **caractérisé en ce que** l'échange de messages (MA) s'effectue par l'intermédiaire de contacts de chargement (ALK) dans le chargeur de batterie (ALE) lorsque la partie mobile sans fil (HA) se trouve dans le chargeur de batterie (ALE) de la station de base sans fil (BS).

8. Procédé selon la revendication 1, **caractérisé en ce que** l'échange de messages (MA) s'effectue par l'intermédiaire d'interfaces air (LSS) dans la station de base (BS) et dans la partie mobile (MT, OA, HA).

9. Procédé selon la revendication 8, **caractérisé en ce que** l'échange de messages (MA) consiste **en ce qu'**un premier message «DEMANDE DE DROITS D'ACCÈS» (M1) est transmis par la partie mobile (MT, OA, HA) à la station de base (BS), avec lequel la partie mobile (MT, OA, HA) se présente à la station de base (BS) et avec lequel la partie mobile (MT, OA, HA) recherche des droits d'accès auprès de la station de base (BS) et **en ce que** soit un deuxième message «REJET DE DROITS D'ACCÈS» (M2) est transmis par la station de base (BS) à la partie mobile (MT, OA, HA), avec lequel la station de base (BS) refuse les droits d'accès pour la partie mobile (MT, OA, HA) lorsque la station de base (BS) ne supporte pas l'enregistrement à commande vocale ou la partie mobile (MT, OA, HA) est déjà connectée, soit un troisième message «CONFIRME DROITS D'ACCÈS» (M3) est transmis par la station de base (BS) à la partie mobile (MT, OA, HA), avec lequel la station de base (BS) accorde à la partie mobile (MT, OA, HA) la recherche des droits d'accès lorsque la station de base (BS) supporte l'enregistrement à commande vocale.

10. Procédé selon la revendication 1, **caractérisé en ce que** la liaison de canal d'utilisation (NKV) est établie par la station de base (BS).

11. Procédé selon la revendication 1 ou 10, **caractérisé en ce que**, avec l'établissement de la liaison de canal d'utilisation (NKV), un texte de bienvenue «Vous souhaitez connecter votre partie mobile. Veuillez énoncer le code PIN.» (BT) est envoyé par la station de base (BS) à la partie mobile (MT, OA, HA) via la liaison de canal d'utilisation (NKV) et est délivré en sortie par celle-ci.

12. Procédé selon la revendication 1, **caractérisé en ce que**, comme identificateur d'authentification RÉEL (IAK), comme identificateur d'authentification RÉEL récupéré (IAK') et comme identificateur d'authentification de CONSIGNE (SAK), à chaque fois un code PIN est utilisé.

13. Procédé selon la revendication 1, **caractérisé en ce qu'**un signal d'identification (KS) généré à partir de l'identificateur d'authentification RÉEL énoncé (IAK) et contenant le modèle vocal (SPM) est transmis par la partie mobile (MT, OA, HA) à la station de base (BS) et **en ce que** l'examen a lieu dans la station de base (BS).

14. Procédé selon la revendication 1, **caractérisé en ce que**, dans la partie mobile (MT, OA, HA), le modèle vocal (SPM) correspondant à l'identificateur d'authentification RÉEL énoncé (IAK) est analysé et l'identificateur d'authentification RÉEL récupéré (IAK') est généré à partir du modèle vocal (SPM) et **en ce que** l'identificateur d'authentification RÉEL récupéré (IAK') est transmis sous forme cryptée (IAK") par la partie mobile (MT, OA, HA) à la station de base (BS) qui décrypte l'identificateur d'authentification RÉEL récupéré (IAK') crypté et le compare ensuite à l'identificateur d'authentification de CONSIGNE (SAK).

15. Procédé selon la revendication 1, **caractérisé en ce que**, lorsque l'identificateurd'authentification RÉEL récupéré (IAK') coïncide avec l'identificateur d'authentification de CONSIGNE (SAK), un quatrième message «ACCEPTE DROITS D'ACCÈS» (M4) est transmis par la station de base (BS) à la partie mobile (MT, OA, HA), avec lequel la partie mobile (MT, OA, HA) reçoit les droits d'accès de la station de base (BS) ou, lorsque l'identificateur d'authentification RÉEL récupéré (IAK') ne coïncide pas avec l'identificateur d'authentification de CONSIGNE (SAK), le deuxième message «REJET DE DROITS D'ACCÈS» (M2) est transmis par la station de base (BS) à la partie mobile (MT, OA, HA), avec lequel les droits d'accès sont refusés à la partie mobile (MT, OA, HA) par la station de base (BS).

16. Procédé selon la revendication 1 ou 14, **caractérisé en ce que**, lorsque l'identificateur d'authentification RÉEL récupéré (IAK') coïncide avec l'identificateur d'authentification de CONSIGNE (SAK), un texte d'avis «Vous êtes connecté. Vous avez le numéro de participant interne 'xyz'.» (HT) est envoyé par la station de base (BS) à la partie mobile (MT, OA, HA) via la liaison de canal d'utilisation (NKV) et est délivré en sortie par celle-ci.

17. Système de télécommunication à télécommunication sans fil entre une partie mobile (MT, OA, HA) et une station de base (BS) pour l'enregistrement de la partie mobile (MT, OA, HA) auprès de la station de base (BS), avec les caractéristiques suivantes :
a) des moyens pour l'établissement d'une disponibilité pour une connexion (ABM, AT, ALE, ALK, GST) dans la partie mobile (MT, OA, HA) et dans la station de base (BS) sont conçus de telle sorte que, lors de leur actionnement respectif, la partie mobile respectivement la station de base peut passer dans un mode de disponibilité pour une connexion en vue d'une connexion mutuelle,
b) un dispositif de commande central (ZST) pour la commande d'opérations d'actionnement et de fonctionnement dans la partie mobile respectivement dans la station de base, des moyens émetteurs de signaux (SSM) et des moyens récepteurs de signaux (SEM) reliés au dispositif de commande central (ZST) ainsi que des moyens d'évaluation de signaux (SAM) associés au dispositif de commande central (ZST) sont conçus dans la partie mobile (MT, OA, HA) et dans la station de base (BS), en formant à chaque fois une unité fonctionnelle commune, de telle sorte que
b1) entre la partie mobile (MT, OA, HA) et la station de base (BS), on peut déterminer par échange de messages (MA) si la station de base (BS) supporte un enregistrement à commande vocale et si la partie mobile (MT, OA, HA) est ainsi en principe capable d'être connectée à la station de base (BS),
b2) entre la partie mobile (MT, OA, HA) et la station de base (BS), une liaison de canal d'utilisation (NKV) convenant à la transmission de données vocales peut être établie lorsque la capacité de principe d'être connectée est déterminée, sinon la partie mobile (MT, OA, HA) détermine si elle est en principe capable d'être connectée à une autre station de base (BS) disponible pour une connexion,
c) un dispositif d'entrée vocale (SEV) et un dispositif générateur de signaux (SEE) relié à celui-ci dans la partie mobile (MT, OA, HA) sont reliés au dispositif de commande central (ZST) dans la partie mobile (MT, OA, HA) et sont conçus de telle sorte que, à partir d'un identificateur d'authentification RÉEL (IAK) énoncé dans le dispositif d'entrée vocale (SEV), un signal d'identification (KS), qui contient un modèle vocal (SPM) correspondant à l'identificateur d'authentification RÉEL (IAK), peut être généré,
d) des moyens de reconnaissance vocale (SPEM) associés au dispositif de commande central (ZST) dans la partie mobile (MT, OA, HA) ou dans la station de base (BS) analysent le signal d'identification (KS) qui leur a été transmis et qui contient le modèle vocal (SPM) et génèrent à partir de ce modèle vocal (SPM) un identifcateur d'authentification RÉEL récupéré (IAK'),
e) des moyens de comparaison (VM) associés au dispositif de commande central (ZST) dans la station de base (BS) vérifient à l'aide de l'identificateur d'authentification RÉEL récupéré (IAK') qui leur a été transmis si l'identificateur d'authentification RÉEL récupéré (IAK') est identique à un identificateur d'authentification de CONSIGNE (SAK),
f) le dispositif de commande central (ZST), les moyens émetteurs de signaux (SSM) et les moyens récepteurs de signaux (SEM) reliés au dispositif de commande central (ZST), les moyens d'évaluation de signaux (SAM) associés au dispositif de commande central (ZST) dans la partie mobile (MT, OA, HA) et dans la station de base (BS) ainsi que les moyens de comparaison (VM) associés au dispositif de commande central (ZST) dans la station de base (BS), en formant une unité fonctionnelle, sont conçus de telle sorte que la partie mobile (MT, OA, HA) peut être enregistrée auprès de la station de base (BS) si l'identificateur d'authentification RÉEL récupéré (IAK') coïncide avec l'identificateur d'authentification de CONSIGNE (SAK) et que sinon la tentative d'enregistrement est rejetée.

18. Système de télécommunication selon la revendication 17, **caractérisé en ce que** le dispositif de commande central (ZST), les moyens émetteurs de signaux (SSM) et les moyens récepteurs de signaux (SEM) reliés au dispositif de commande central (ZST), les moyens d'évaluation de signaux (SAM) associés au dispositif de commande central (ZST) dans la partie mobile (MT, OA, HA) et dans la station de base (BS) ainsi que les moyens de comparaison (VM) associés au dispositif de commande central (ZST) dans la station de base (BS), en formant une unité fonctionnelle commune, sont conçus de telle sorte que, après une tentative d'enregistrement rejetée, l'enregistrement peut être répété au moins une fois avant que l'enregistrement a définitivement échoué,

19. Système de télécommunication selon la revendication 17, **caractérisé en ce que** le dispositif de commande central (ZST), les moyens émetteurs de signaux (SSM) et les moyens récepteurs de signaux (SEM) reliés au dispositif de commande central (ZST) et les moyens d'évaluation de signaux (SAM) associés au dispositif de commande central (ZST) dans la partie mobile (MT, OA, HA) pour déterminer si la partie mobile (MT, OA, HA) est capable d'être connectée à une autre station de base (BS) disponible pour une connexion sont conçus de telle sorte et forment une unité fonctionnelle commune avec le dispositif de commande central (ZST), avec les moyens émetteurs de signaux (SSM) et les moyens récepteurs de signaux (SEM) reliés au dispositif de commande central (ZST) et avec les moyens d'évaluation de signaux (SAM) associés au dispositif de commande central (ZST) dans l'autre station de base (BS), jusqu'à ce que la partie mobile (MT, OA, HA) ne puisse plus trouver d'autre station de base (BS) disponible pour une connexion.

20. Système de télécommunication selon la revendication 17, **caractérisé en ce que** la partie mobile (MT, OA, HA) est un combiné sans fil (HA) fonctionnant sur batterie et comportant un clavier ou un moyen d'entrée à base de stylet pour l'entrée de caractères et la station de base (BS) est une station de base sans fil (BS) avec un chargeur de batterie (ALE), les moyens pour l'établissement de la disponibilité pour une connexion (ABM, AT, ALE, ALK, GST) étant conçus de telle sorte dans la station de base sans fil (BS) et dans le combiné sans fil (HA) que la disponibilité pour une connexion peut être établie en plaçant le combiné sans fil (HA) dans le chargeur de batterie (ALE).

21. Système de télécommunication selon la revendication 17, **caractérisé en ce que** la partie mobile (MT, OA, HA) est un combiné sans fil (HA) comportant un clavier ou un moyen d'entrée à base de stylet pour l'entrée de caractères avec un élément de commande pour le commencement d'une conversation (GST), en particulier une touche de début de conversation (GST), et **en ce que** la station de base (BS) est une station de base sans fil (BS) avec un élément de commande pour l'établissement de la disponibilité pour une connexion (AT), les moyens pour l'établissement de la disponibilité pour une connexion (ABM, AT, ALE, ALK, GST) étant conçus de telle sorte dans la station de base sans fil (BS) que la disponibilité pour une connexion de la station de base sans fil (BS) peut être établie en actionnant l'élément de commande pour l'établissement de la disponibilité pour une connexion (AT) et les moyens pour l'établissement de la disponibilité pour une connexion (ABM, AT, ALE, ALK, GST) étant conçus de telle sorte dans le combiné sans fil (HA) que la disponibilité pour une connexion du combiné sans fil (HA) peut être établie en actionnant l'élément de commande pour le commencement d'une conversation (GST).

22. Système de télécommunication selon la revendication 17, **caractérisé en ce que** la partie mobile (MT, OA, HA) est une oreillette sans F1 (OA) avec un élément de commande pour le commencement d'une conversation (GST), en particulier une touche de début de conversation (GST), et **en ce que** la station de base (BS) est une station de base sans fil (BS) avec un élément de commande pour l'établissement de la disponibilité pour une connexion (AT), les moyens pour l'établissement de la disponibilité pour une connexion (ABM, AT, ALE, ALK, GST) étant conçus de telle sorte dans la station de base sans fil (BS) que la disponibilité pour une connexion de la station de base sans fil (BS) peut être établie en actionnant l'élément de commande pour l'établissement de la disponibilité pour une connexion (AT) et les moyens pour l'établissement de la disponibilité pour une connexion (ABM, AT, ALE, ALK, GST) étant conçus de telle sorte dans l'oreillette sans fil (OA) que la disponibilité pour une connexion de l'oreillette sans fil (OA) peut être établie en actionnant l'élément de commande pour le commencement d'une conversation (GST).

23. Système de télécommunication selon les revendications 17 et 20, **caractérisé en ce que** le dispositif de commande central (ZST), les moyens émetteurs de signaux (SSM) et les moyens récepteurs de signaux (SEM) reliés au dispositif de commande central (ZST), les moyens d'évaluation de signaux (SAM) associés au dispositif de commande central (ZST) dans le combiné sans fil (HA) et dans la station de base sans fil (BS), en formant une unité fonctionnelle commune, sont conçus de telle sorte, que l'échange de messages (MA) s'effectue par l'intermédiaire des contacts de chargement (ALK) dans le chargeur de batterie (ALE), lorsque le combiné sans fil (HA) se trouve dans le chargeur de batterie (ALE) de la station de base sans fil (BS).

24. Système de télécommunication selon la revendication 17, **caractérisé en ce que** le dispositif de commande central (ZST), les moyens émetteurs de signaux (SSM) et les moyens récepteurs de signaux (SEM) reliés au dispositif de commande central (ZST), les moyens d'évaluation de signaux (SAM) associés au dispositif de commande central (ZST) dans la partie mobile (MT, OA, HA) et dans la station de base (BS), en formant une unité fonctionnelle commune, sont conçus de telle sorte, que l'échange de messages (MA) s'effectue par l'intermédiaire d'interfaces air (LSS) dans la station de base (BS) et dans la partie mobile (MT, OA, HA).

25. Système de télécommunication selon la revendication 24, **caractérisé en ce que** le dispositif de commande central (ZST), les moyens émetteurs de signaux (SSM) et les moyens récepteurs de signaux (SEM) reliés au dispositif de commande central (ZST), les moyens d'évaluation de signaux (SAM) associés au dispositif de commande central (ZST) dans la partie mobile (MT. OA, HA) et dans la station de base (BS), en formant une unité fonctionnelle commune, sont conçus de telle sorte, que l'échange de messages (MA) consiste **en ce qu'**un premier message «DEMANDE DE DROITS D'ACCÈS» (MI) peut être transmis par la partie mobile (MT, OA, HA) à la station de base (BS), avec lequel la partie mobile (MT, OA, HA) se présente à la station de base (BS) et avec lequel la partie mobile (MT, OA, HA) recherche des droits d'accès auprès de la station de base (BS) et **en ce que** soit un deuxième message « REJET DE DROITS D'ACCÈS » (M2) peut être transmis par la station de base (BS) à la partie mobile (MT, OA, HA), avec lequel la station de base (BS) refuse les droits d'accès pour la partie mobile (MT, OA, HA) lorsque la station de base (BS) ne supporte pas l'enregistrement à commande vocale ou la partie mobile (MT, OA, HA) est déjà connectée, soit un troisième message « CONFIRME DROITS D'ACCÈS » (M3) peut être transmis par la station de base (BS) à la partie mobile (MT, OA, HA), avec lequel la station de base (BS) accorde à la partie mobile (MT, OA, HA) la recherche des droits d'accès lorsque la station de base (BS) supporte l'enregistrement à commande vocale.

26. Système de télécommunication selon la revendication 17, **caractérisé en ce que** le dispositif de commande central (ZST) et les moyens émetteurs de signaux (SSM) et les moyens récepteurs de signaux (SEM) reliés au dispositif de commande central (ZST) dans la station de base (BS) sont conçus de telle sorte, que la liaison de canal d'utilisation (NKV) peut être établie par la station de base (BS).

27. Système de télécommunication selon la revendication 17 ou 26, **caractérisé en ce que** des moyens générateur de texte (TEM) associés au dispositif de commande central (ZST) dans la station de base (BS), le dispositif de commande central (ZST) et les moyens émetteurs de signaux (SSM) reliés au dispositif de commande central (ZST) dans la station de base (BS) ainsi qu'un dispositif de sortie de texte (TAV) associé au dispositif de commande central (ZST) dans la partie mobile (MT, OA, HA), le dispositif de commande central (ZST) et les moyens récepteurs de signaux (SEM) reliés au dispositif de commande central (ZST) dans la partie mobile (MT, OA, HA), en formant une unité fonctionnelle commune, sont conçus de telle sorte que, avec l'établissement de la liaison de canal d'utilisation (NKV), un texte de bienvenue «Vous souhaitez connecter votre partie mobile. Veuillez énoncer le code PIN.» (BT) peut être envoyé par la station de base (BS) à la partie mobile (MT, OA, HA) via la liaison de canal d'utilisation (NKV) et peut être délivré en sortie par celle-ci par l'intermédiaire du dispositif de sortie de texte (TAV).

28. Système de télécommunication selon la revendication 17, **caractérisé en ce que** l'identificateur d'authentification RÉEL (IAK), l'identificateur d'authentification RÉEL récupéré (IAK') et l'identificateur d'authentification de CONSIGNE (SAK) sont des codes PIN.

29. Système de télécommunication selon la revendication 17, **caractérisé en ce que** les moyens de reconnaissance vocale (SPEM) agencés dans la station de base (BS), les moyens de comparaison (VM) reliés aux moyens de reconnaissance vocale (SPEM), le dispositif de commande central (ZST) et les moyens récepteurs de signaux (SEM) dans la station de base (BS) ainsi que le dispositif d'entrée vocale (SEV), le dispositif générateur de signaux (SEE), le dispositif de commande central (ZST) et les moyens émetteurs de signaux (SSM) dans la partie mobile (MT, OA, HA), en formant une unité fonctionnelle, sont conçus de telle sorte que le signal d'identification (KS) peut être transmis par le dispositif générateur de signaux (SEE) dans la partie mobile (MT, OA, HA) aux moyens de reconnaissance vocale (SPEM) dans la station de base (BS).

30. Système de télécommunication selon la revendication 17, **caractérisé en ce que** les moyens de reconnaissance vocale (SPEM) agencés dans la partie mobile (MT, OA, HA), le dispositif d'entrée vocale (SEV), le dispositif générateur de signaux (SEE), le dispositif de commande central (ZST), des moyens de cryptage (VSM) associés au dispositif de commande central (ZST) et les moyens émetteurs de signaux (SSM) dans la partie mobile (MT, OA, HA) ainsi que le dispositif de commande central (ZST), les moyens récepteurs de signaux (SEM), les moyens de comparaison (VM) et des moyens de décryptage (ESM) associés au dispositif de commande central (ZST) dans la station de base (BS), en formant une unité fonctionnelle, sont conçus de telle sorte que l'identificateur d'authentification RÉEL récupéré (IAK') peut être transmis sous forme cryptée (IAK") par les moyens de cryptage (VSM) dans la partie mobile (MT, OA, HA) aux moyens de décryptage (ESM) dans la station de base (BS) qui décryptent l'identificateur d'authentification RÉEL récupéré (IAK') et le retransmettent ensuite aux moyens de comparaison (VM).

31. Système de télécommunication selon la revendication 17, **caractérisé en ce que** le dispositif de commande central (ZST), les moyens émetteurs de signaux (SSM) et les moyens récepteurs de signaux (SEM) reliés au dispositif de commande central (ZST), les moyens d'évaluation de signaux (SAM) associés au dispositif de commande central (ZST) dans la partie mobile (MT, OA, HA) et dans la station de base (BS) ainsi que les moyens de comparaison (VM), en formant une unité fonctionnelle commune, sont conçus de telle sorte que, lorsque l'identificateur d'authentification RÉEL récupéré (IAK') coïncide avec l'identificateur d'authentification de CONSIGNE (SAK), un quatrième message «ACCEPTE DROITS D'ACCÈS» (M4) peut être transmis par la station de base (BS) à la partie mobile (MT, OA, HA), avec lequel la partie mobile (MT, OA, HA) obtient les droits d'accès de la station de base (BS).

32. Système de télécommunication selon la revendication 17 ou 27, **caractérisé en ce que** des moyens générateur de texte (TEM) associés au dispositif de commande central (ZST) dans la station de base (BS), le dispositif de commande central (ZST), les moyens de comparaison (VM) et les moyens émetteurs de signaux (SSM) reliés au dispositif de commande central (ZST) dans la station de base (BS) ainsi que le dispositif de sortie de texte (TAV) associé au dispositif de commande central (ZST) dans la partie mobile (MT, OA, HA), le dispositif de commande central (ZST) et les moyens récepteurs de signaux (SEM) reliés au dispositif de commande central (ZST) dans la partie mobile (MT, OA, HA), en formant une unité fonctionnelle, sont conçus de telle sorte que, lorsque l'identificateur d'authentification RÉEL récupéré (IAK') coïncide avec l'identificateur d'authentification de CONSIGNE (SAK), un texte d'avis «Vous êtes connecté. Vous avez le numéro de participant interne 'xyz'.» (HT) peut être envoyé par la station de base (BS) à la partie mobile (MT, OA. HA) via la liaison de canal d'utilisation (NKV) et peut être délivré en sortie par celle-ci par l'intermédiaire du dispositif de sortie de texte (TAV).
